# EUROPÄISCHE PATENTSCHRIFT

(11) **EP 1 099 172 B1**
(45) Veröffentlichungstag und Bekanntmachung des Hinweises auf die Patenterteilung: **07.04.2004**
(21) Anmeldenummer: 99944258.5
(22) Anmeldetag: 01.07.1999
(51) Int. Cl.: G06F 17/30

(54) **VERFAHREN, ANORDNUNG UND SATZ MEHRERER ANORDNUNGEN ZUR BEHEBUNG MINDESTENS EINER INKONSISTENZ IN EINER DATENBANKMENGE, DIE EINE DATENBANK SOWIE MINDESTENS EINE KOPIEDATENBANK DER DATENBANK AUFWEIST**
METHOD, ARRANGEMENT AND SET OF A PLURALITY OF ARRANGEMENTS FOR REMEDYING AT LEAST ONE INCONSISTENCY IN A GROUP OF DATABASES WHICH COMPRISES A DATABASE AND AT LEAST ONE COPY DATABASE OF THE DATABASE
PROCEDE, DISPOSITIF ET JEU DE DISPOSITIFS POUR L'ELIMINATION D'AU MOINS UNE INCONSISTANCE DANS UN ENSEMBLE DE BANQUES DE DONNEES COMPORTANT UNE BANQUE DE DONNEES ET AU MOINS UNE BANQUE DE DONNEES DE COPIE DE LADITE BANQUE DE DONNEES

(30) Priorität: 27.07.1998 DE 19833778
(43) Veröffentlichungstag der Anmeldung: 16.05.2001
(73) Patentinhaber: SIEMENS AKTIENGESELLSCHAFT, 80333 München (DE)
(72) Erfinder: BERGER, Michael, D-85635 Höhenkirchen (DE)
(86) Internationale Anmeldenummer: PCT/DE1999/001999
(87) Internationale Veröffentlichungsnummer: WO 2000/007116

(56) Entgegenhaltungen:
- EP-A- 0 716 385
- DATE C J: "DISTRIBUTED DATABASES" , US,READING, ADDISON WESLEY, PAGE(S) 291-340-309 XP002016220 Seite 318, Zeile 7 -Seite 323, Zeile 15
- ROTHNIE J B ET AL: "INTRODUCTION TO A SYSTEM FOR DISTRIBUTED DATABASES (SDD-1)" ACM TRANSACTIONS ON DATABASE SYSTEMS,US,ASSOCIATION FOR COMPUTING MACHINERY. NEW YORK, Bd. 5, Nr. 1, Seite 1-17 XP000747926 ISSN: 0362-5915
- MUTH P ET AL: "SEMANTIC CONCURRENCY CONTROL IN OBJECT-ORIENTED DATABASE SYSTEMS" PROCEEDINGS OF THE INTERNATIONAL CONFERENCE ON DATA ENGINEERING,US,LOS ALAMITOS, IEEE COMP. SOC. PRESS, Bd. CONF. 9, Seite 233-242 XP000380184 ISBN: 0-8186-3570-3

## Beschreibung

Die Erfindung betrifft ein Verfahren, eine Anordnung sowie einen Satz mehrerer Anordnungen zur Behebung mindestens einer Inkonsistenz in einer Datenbankmenge, die eine Datenbank sowie mindestens eine Kopiedatenbank der Datenbank aufweist.

Ein solches Verfahren ist aus [1] bekannt.

Bei dem aus [1] bekannten Verfahren kommunizieren Rechner über ein Kommunikationsnetz unter Verwendung eines Kommunikationsprotokolls miteinander.

Unter einem Kommunikationsnetz ist beispielsweise ein Datennetz, ein Funknetz oder auch ein übliches Telefonnetz zu verstehen.

Unter einem Kommunikationsprotokoll ist ein Protokoll zur Festlegung des Datenformats zu verstehen, welches im Rahmen einer Kommunikation zwischen den Rechnern verwendet wird. Ein solches Kommunikationsprotokoll ist beispielsweise das Transport Control Protocol/Internet Protocol (TCP/IP).

Bei dem Verfahren aus [1] sind in einem ersten Rechner eine Datenbank und in jedem weiteren Rechner eine Kopie der Datenbank, im weiteren als Kopiedatenbank bezeichnet, gespeichert.

Die Datenbank bzw. die Kopiedatenbanken werden im Rahmen einer Sitzung von jeweils einem Rechner verändert, d.h. die in der Datenbank bzw. einer Kopiedatenbank enthaltenen Daten bzw. deren Struktur werden verändert.

Unter einer Datenbank ist in diesem Zusammenhang beispielsweise eine hierarchische oder auch eine objektorientierte Datenbank zu verstehen.

Eine Datenbank enthält Daten, die gemäß einer vorgegebenen Struktur gespeichert sind und miteinander in Zusammenhang stehen. Jedes Objekt, d.h. jeder Datensatz innerhalb der Datenbank ist üblicherweise über einen Identifikator (Identifier) eindeutig identifizierbar.

Es kommt vor, daß Änderungen an einer Kopiedatenbank vorgenommen werden, ohne daß dieselbe Änderung auch in der Datenbank selbst erfolgt oder auch umgekehrt.

Soll nun aus der jeweiligen Kopiedatenbank und der Datenbank eine konsistente Datenbank erstellt werden, so gilt es, eine durch Hinzufügen, Entfernen oder Ändern der Daten bzw. deren Struktur entstehende Inkonsistenz zu ermitteln und zu beheben.

Unter einer Inkonsistenz ist im weiteren jede syntaktische Differenz innerhalb einer Kopiedatenbank bzw. der Datenbank, d.h. alle in den Kopiedatenbanken bzw. der Datenbank auftretenden Abweichungen zwischen den in der Datenbank bzw. einer Kopiedatenbank enthaltenen Datenelementen, ihren Eigenschaften sowie ihren Beziehungen zueinander zu verstehen.

In [1] sind verschiedene Möglichkeiten aufgezeigt, um eine solche Inkonsistenz zu beheben.

Der Erfindung liegt das Problem zugrunde, ein weiteres Verfahren bzw. eine weitere Vorrichtung zur Behebung von Inkonsistenzen in einer Datenbankmenge anzugeben, mit dem eine möglichst Rechenzeit einsparende Behebung einer Inkonsistenz möglich wird.

Das Problem wird durch das Verfahren, durch die Anordnung sowie durch den Satz mehrerer Anordnungen mit den Merkmalen der unabhängigen Patentansprüche gelöst.

Das Verfahren zur rechnergestützten Behebung mindestens einer Inkonsistenz in einer Datenbankmenge, die eine Datenbank sowie mindestens eine Kopiedatenbank der Datenbank aufweist, welche Inkonsistenz durch eine Änderung in der Datenbank und/oder in der Kopiedatenbank entsteht, weist folgende Schritte auf:
a) mindestens ein Teil der Operationen, die eine Inkonsistenz erzeugen können, ist definierten Konflikttypen zugeordnet,
b) jedem Konflikttyp ist ein Entscheidungsset zugeordnet, mit dem mögliche Entscheidungen angegeben werden, mit denen eine durch mindestens eine Operation des jeweiligen Konflikttyps erzeugte Inkonsistenz behoben werden kann, und
c) die Inkonsistenz wird unter Verwendung des Entscheidungssets behoben.

Die Anordnung zur Behebung mindestens einer Inkonsistenz in einer Datenbankmenge, die eine Datenbank sowie mindestens eine Kopiedatenbank der Datenbank aufweist, welche Inkonsistenz durch Änderung der Daten in der Datenbank oder in der Kopiedatenbank entsteht, weist mindestens einen Prozessor auf, der derart eingerichtet ist, daß folgende Schritte durchführbar sind:
a) mindestens ein Teil der Operationen, die eine Inkonsistenz erzeugen können, ist definierten Konflikttypen zugeordnet,
b) jedem Konflikttyp ist ein Entscheidungsset zugeordnet, mit dem mögliche Entscheidungen angegeben werden, mit denen eine durch eine Operation des jeweiligen Konflikttyps erzeugte Inkonsistenz behoben werden kann,
c) die Inkonsistenz wird unter Verwendung des Entscheidungssets behoben.

Der Satz mehrerer Anordnungen zur Behebung mindestens einer Inkonsistenz in einer Datenbankmenge, die eine Datenbank sowie mindestens eine Kopiedatenbank der Datenbank aufweist, welche Inkonsistenz durch Änderung der Datenbank und/oder der Kopiedatenbank entsteht, weist mehrere Anordnungen auf, deren jede mindestens einen Prozessor aufweist, der derart eingerichtet ist, daß folgende Schritte durchführbar sind:
a) mindestens ein Teil der Operationen, die eine Inkonsistenz erzeugen können, ist definierten Konflikttypen zugeordnet,
b) jedem Konflikttyp ist ein Entscheidungsset zugeordnet, mit dem mögliche Entscheidungen angegeben werden, mit denen eine durch mindestens eine Operation des jeweiligen Konflikttyps erzeugte Inkonsistenz behoben werden kann,
c) die Inkonsistenz wird unter Verwendung des Entscheidungssets behoben.
Die Anordnungen sind miteinander koppelbar.

Durch die Erfindung wird es möglich, eine Inkonsistenz in einer komplexen Datenbank generisch zu lösen.

Bevorzugte Weiterbildungen der Erfindung ergeben sich aus den abhängigen Ansprüchen.

In einer bevorzugten Ausgestaltung werden mehrere Inkonsistenzen behoben.

Bevorzugt wird in einer weiteren Ausgestaltung jedem Konflikttyp ein Entscheidungsset zugeordnet ist, mit dem mögliche Entscheidungen angegeben werden, mit denen eine durch mehrere Operationen des jeweiligen Konflikttyps erzeugte Inkonsistenz behoben werden kann.

Ferner ist es in einer Weiterbildung vorgesehen, daß die Datenbankmenge mehrere Kopiedatenbanken der Datenbank aufweist.

Zur Vereinfachung und somit zur Rechenzeiteinsparung bei der Behebung einer Inkonsistenz ist es in einer Ausgestaltung der Erfindung vorgesehen, daß vor der Behebung jede Inkonsistenz und deren Abhängigkeiten voneinander ermittelt werden.

Eine weitere Einsparung an benötigter Rechenzeit zur Behebung mehrerer Inkonsistenzen wird in einer weiteren Ausgestaltung dadurch erreicht, daß das Entscheidungsset mindestens eines Konflikttyps während der Behebung der Inkonsistenzen verändert wird.

Dabei erfolgt die Änderung des jeweiligen Entscheidungssets bevorzugt abhängig von Abhängigkeiten der Inkonsistenzen.

In einer bevorzugten Ausgestaltung ist es vorgesehen, nach einer vorgebbaren Anzahl behobener Inkonsistenzen die Datenbankmenge auf weitere Inkonsistenzen und deren Abhängigkeit hin zu untersuchen.

Die Datenbankmenge enthält bevorzugt in einer Ausgestaltung eine objektorientierte Datenbank.

Das Verfahren kann im Rahmen der objektorientierten Softwareentwicklung oder auch im Rahmen der Erstellung eines strukturierten elektronischen Dokuments eingesetzt werden.

Ein Ausführungsbeispiel der Erfindung ist in den Figuren dargestellt und wird im weiteren näher erläutert.

Es zeigen
- Figur 1: ein Ablaufdiagramm, in dem die Verfahrensschritte des Ausführungsbeispiels dargestellt sind;
- Figur 2: eine Skizze, in der Rechner dargestellt sind, die über ein Kommunikationsnetz miteinander verbunden sind;
- Figur 3: eine Skizze einer Datenbankstruktur;
- Figur 4: eine Tabellenübersicht über mögliche Konflikte und Entscheidungssets mit Entscheidungsmöglichkeiten, um die jeweiligen Konflikte zu beheben.

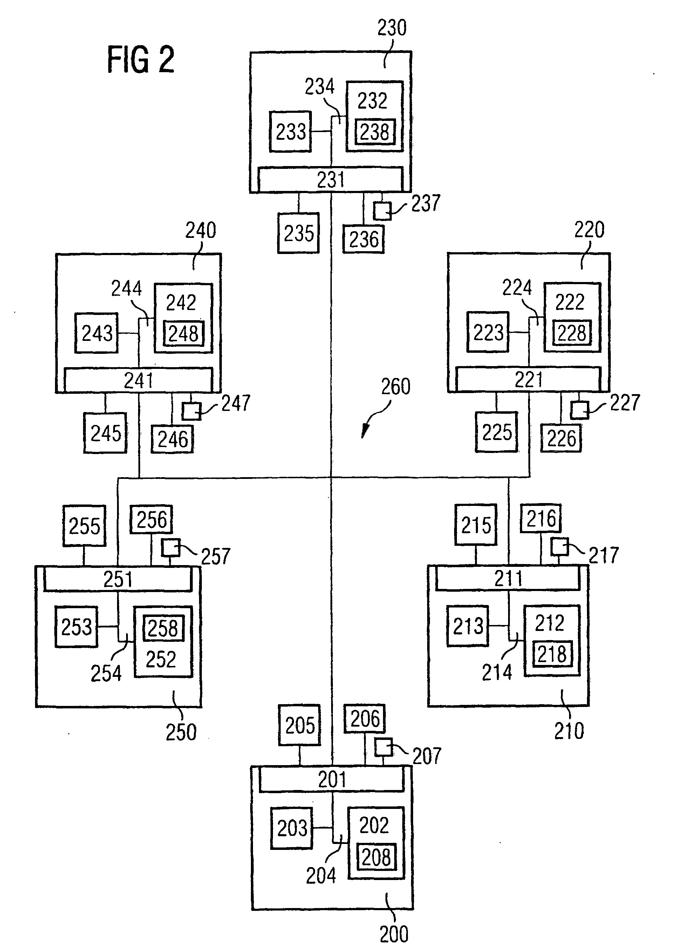

**Fig.2** zeigt einen ersten Rechner 200 mit einem Speicher 202 und einem Prozessor 203, die jeweils über einen Bus 204 miteinander und mit einer Eingangs-/Ausgangsschnittstelle 201 verbunden sind.

Über die Eingangs-/Ausgangsschnittstelle 201 ist der erste Rechner 200 mit einem Bildschirm 205, einer Tastatur 206 sowie einer Computermaus 207 verbunden.

Ferner ist der erste Rechner 200 über ein Kommunikationsnetz 260, in dem Beispiel ein ISDN-Netz (Integrated Services Digital Network) mit weiteren Rechnern 210, 220, 230, 240 und 250 verbunden.

In dem ersten Rechner 200 ist eine Datenbank 208 gespeichert.

Die weiteren Rechner 210, 220, 230, 240 und 250 weisen jeweils ebenfalls einen Prozessor 213, 223, 233, 243 und 253 sowie jeweils einen Speicher 212, 222, 232, 242 und 252 auf. Jeweils der Prozessor 213, 223, 233, 243 und 253 und der Speicher 212, 222, 232, 242 und 252 sind über jeweils einen Bus 214, 224, 234, 244 und 254 über eine Eingangs-/Ausgangsschnittstelle 211, 221, 231, 241 und 251 mit dem Kommunikationsnetz 260 verbunden. Ferner sind die weiteren Rechner 210, 220, 230, 240 und 250 jeweils mit einem Bildschirm 215, 225, 235, 245 und 255 sowie einer Tastatur 216, 226, 236, 246 und 256 sowie einer Computermaus 217, 227, 237, 247 und 257 verbunden.

Jeweils eine Kopie der Datenbank 208, im weiteren als Kopiedatenbank 218, 228, 238, 248 und 258 bezeichnet, wird von dem ersten Rechner 200 an jeweils einen weiteren Rechner 210, 220, 230, 240 und 250 übermittelt und dort in dessen Speicher 212, 222, 232, 242 und 252 gespeichert.

Nach Übermittlung der Kopiedatenbanken 218, 228, 238, 248 und 258 unterbrechen die Rechner 200, 210, 220, 230, 240 und 250 die Kommunikation und es erfolgt jeweils unter den Rechnern Rechner 200, 210, 220, 230, 240 und 250 autark eine Änderung, d.h. Entfernung oder Hinzufügung von Daten oder Entfernung oder Hinzufügung von Abhängigkeiten der Daten in einer Kopiedatenbank 218, 228, 238, 248 und 258 bzw. der Datenbank 208.

Nach Wiederaufnahme der Kommunikation zwischen dem ersten Rechner 200 und den weiteren Rechnern 210, 220, 230, 240 und 250 soll eine konsistente Datenbank aus der Datenbank 208 und den Kopiedatenbanken 218, 228, 238, 248 und 258 gebildet werden.

Zu diesem Zweck ist es erforderlich, jeweils vorgenommene Änderungen in der Datenbank 208 oder den Kopiedatenbanken festzustellen, um somit Inkonsistenzen zwischen den Kopiedatenbanken sowie der Datenbank 208 zu ermitteln, damit die Inkonsistenzen behoben werden können.

Unabhängig von der syntaktischen Struktur und der Abhängigkeiten der Datenelemente untereinander kann jedes Datenelement beliebig viele Eigenschaften besitzen. Jede Eigenschaft ist dabei von einem bestimmten Eigenschaftstyp und wird durch einen aktuellen Wert repräsentiert. Für alle Eigenschaften wird bezüglich der Wertebereiche die Annahme getroffen, daß alle Werte nur aus Symbolen oder zusammengesetzten Symbolen einer ASCII-Tabelle bestehen dürfen (Ziffern, Zahlen, Buchstaben, Sonderzeichen, Zeichenketten). Eine Folge solcher Zeichen und Symbole wird nachfolgend als Eintrag bezeichnet. Komplexere Eigenschaften werden bei der Anwendungsmodellierung durch Datenelemente und Beziehungen repräsentiert.

Im weiteren werden drei Typen von Eigenschaften bei der syntaktischen Analyse in Abhängigkeit der auf der Eigenschaft ausführbaren Operationen unterschieden:
- **Einzelner Wert:**
   Ein "Wert" als Eigenschaftstyp beschreibt einen einzelnen Eintrag, wobei der Eintrag immer in seiner Gesamtheit gesehen und auch so verändert wird. Eine Veränderung der Eigenschaft vom Typ "Wert" erfolgt dabei immer durch eine vollkommene Ersetzung des Eintrages der Eigenschaft durch einen neuen Eintrag.
- **Aufzählung:**
   Eine "Aufzählung" als Eigenschaftstyp beschreibt eine Menge beliebiger Einträge, wobei die Einträge in keiner Relation zueinander stehen und ihrerseits einen einzelnen Wert, eine Aufzählung oder eine geordnete Aufzählung darstellen können. Die einzelnen Einträge können dabei nur einzeln hinzugefügt oder gelöscht werden. Die Eindeutigkeit der Einträge muß bei eventueller Anforderung durch die Anwendung gewährleistet werden. Ein Beispiel für eine Datenstruktur, die diesen Eigenschaftstyp repräsentiert ist eine Hash-Tabelle oder ein Array.
- **Geordnete Aufzählung:**
   Eigenschaften des Typs "geordnete Aufzählung" beschreiben wie Eigenschaften des einfachen Aufzählungstyps eine Menge beliebiger Einträge. Die Einträge stehen jedoch hier in einer definierten Reihenfolge zueinander, die über einen Index für jeden Eintrag festgelegt ist. Die Festlegung der Indices erfolgt relativ zum Beginn der Aufzählung. Eine Einfüge-Operation mit einzelnen oder mehreren Einträgen bezieht sich deshalb immer auf einen Index. Eine Lösch-Operation kann sich auf einen einzelnen Eintrag mit nur einem Index oder auf eine Reihe aufeinanderfolgender Einträge und somit einem Anfangs- und einem Endindex beziehen. Das Kriterium der Reihenfolge wird von einem Anwendungsprogramm definiert und auch die Einhaltung der Reihenfolgekriterien wird von ihm überwacht. Ein Beispiel für diesen Eigenschaftstyp ist eine indizierte Liste mit beliebigen Einträgen (z.B. Textdokument), bei der jede Zeile oder jedes Zeichen einem Eintrag entspricht.

Unter einem Datenelement DE ist ein 4-Tupel zu verstehen, welches folgendermaßen definiert ist:

### Datenelement

Ein Datenelement DE ist ein 4-Tupel
DE *def* (ID, inforaum, elementtyp, eigenschaften);
- ID ist ein systemweit eineindeutiger Identifier
- inforaum ∈ MIR; wobei MIR eine Menge aller Informationsräume ist
- elementtyp ∈ ET; wobei ET eine Menge aller Datenelementtypen ist
- eigenschaften ⊆ {(name, eigenschaftstyp, wert):
- name ∈ MEN, wert ∈ MEW, eigenschaftstyp ∈ MET},
   wobei:
   MEN eine Menge aller Eigenschaftsnamen ist und gilt:
      ∀ i ∈ {1,...,n}; ∀ k ∈ (1, ...,m}: nameᵢ ≠ nameₖ,
   MEW eine Menge aller Eigenschaftswerte ist sowie
   MET eine Menge aller Eigenschaftstypen
      {"wert", "aufzählung", "geordnete aufzählung"} ist.

Ein Informationsraum wird im weiteren folgendermaßen definiert:

### Informationsraum

Ein Informationsraum IR ist ein 3-Tupel
IR *def* (ID, irname, eigentümer, daten)
- ID ist ein systemweit eineindeutiger Identifier,
   wobei gilt:
   ∀ i ∈ (1, ..., n); ∀ k ∈ (1, ..., n); i ≠ k:
   IRi.ID ≠ IRk.ID;
   wobei MIR eine Menge aller im System vorhandenen Irs ist und n deren Anzahl;
- irname ∈ MIRN
   wobei gilt:
   ∀ i ∈ (1, ..., m); ∀ k ∈ (1, ..., m); i ≠ k: Iri.irname ≠ Irk.irname;
   wobei MIR die Menge aller im System vorhandenen Irs ist und
   m deren Anzahl;
   MIRN eine Menge aller möglichen Informationsraumnamen darstellt;
- eigentümer = Ni mit Ni ∈ MN oder Ngi mit Ngi ∈ MNG;
- daten sind die durch eine Nutzergruppe zugreifbaren und dem IR zugeordneten Daten.

Eine Beziehung zwischen den Datenelementen wird im weiteren folgendermaßen definiert:

### Beziehung zwischen Datenelementen

Eine Beziehung BZ zwischen Datenelementen ist ein 3-Tupel
BZ *def* (beziehungstyp, name, datenelement1, datenelement2)
- name ∈ MBN; wobei MBN eine Menge aller Beziehungsnamen ist
- beziehungstyp ∈ MBT; wobei MBT eine Menge aller Beziehungstypen
   {"ungerichtet", "logisch", "nachfolger", "subsup"} ist
- datenelement1, 2 ∈ MDE; wobei MDE eine Menge aller Datenelemente ist.

Um Inkonsistenzen zu ermitteln, wird in jedem Rechner 200, 210, 220, 230, 240 und 250 jeweils ein Protokoll über alle an der Datenbank bzw. der jeweiligen Kopiedatenbank vorgenommenen Operation mitgeführt und in Form einer Liste gespeichert.

Die gespeicherte Liste wird im weiteren als Historie bezeichnet.

Somit ist der Datenbank 208 sowie jeder Kopiedatenbank 218, 298, 238, 248 und 258 jeweils eine Historie zugeordnet.

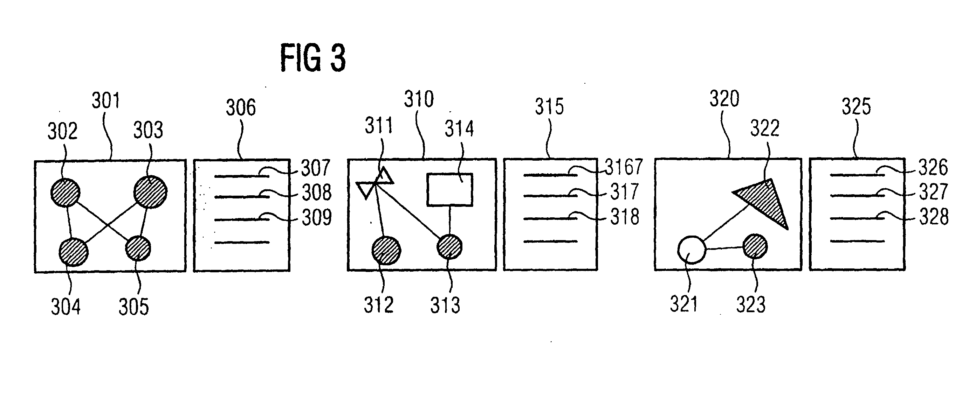

Diese Situation ist in **Fig.3** dargestellt. **Fig.3** zeigt die Datenbank 301 mit Objekten 302, 303, 304 und 305 sowie einer Historie 306, die als Einträge 307, 308, 309 Änderungsoperationen gespeichert hat, die seit Unterbrechung der Kommunikation mit den weiteren Rechnern 210, 220, 230, 240 und 250 von dem ersten Rechner 200 an der Datenbank 301 durchgeführt wurden. Die Einträge 307, 308, 309, werden ebenfalls in dem Speicher 202 des ersten Rechners 200 gespeichert.

Einer ersten Kopiedatenbank 310 mit Objekten 311, 312, 313 und 314 ist ebenfalls eine Historie 315 mit entsprechenden Änderungsoperationen 316, 317, 318 zugeordnet. Die Kopiedatenbank 310 ist in dem weiteren Rechner 210 gespeichert.

Eine zweite Kopiedatenbank 320 mit Objekten 321, 322, 323 und der ihr zugeordneten Historie 325 mit Änderungsoperationen 326, 327, 328 ist in einem weiteren Rechner 220 gespeichert.

Zur Bildung der konsistenten Datenbank, d.h. zur Reintegration aller Kopiedatenbanken 218, 228, 238, 248 und 258 mit der Datenbank 208 werden die Historien 315, 325, ... zu dem ersten Rechner 200 über das Kommunikationsnetz 260 übertragen und in dem Speicher 202 des ersten Rechners 200 gespeichert.

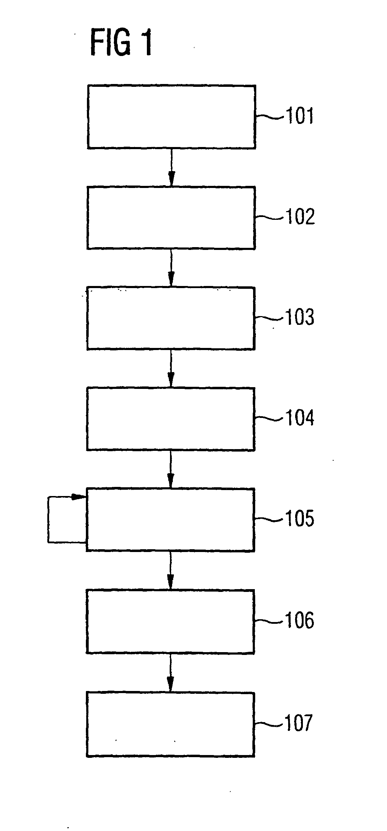

Zu Beginn der Reintegration, der in **Fig.1** durch Schritt 101 beschrieben ist, werden alle Historien der Kopiedatenbanken zu dem ersten Rechner übertragen und dort gespeichert (Schritt 102).

In einem dritten Schritt (Schritt 103) werden alle im Rahmen der Reintegration zu berücksichtigende Historien 315, 325, ... bestimmt.

Im weiteren werden folgende Änderungsoperationen berücksichtigt, mit denen eindeutig die aufgetretenen Inkonsistenzen beschrieben werden.

Im Rahmen dieses Ausführungsbeispiels werden folgende neun Operationen als Änderungsoperationen berücksichtigt, die im weiteren in Form eines Pseudo-Programmcodes beschrieben werden:

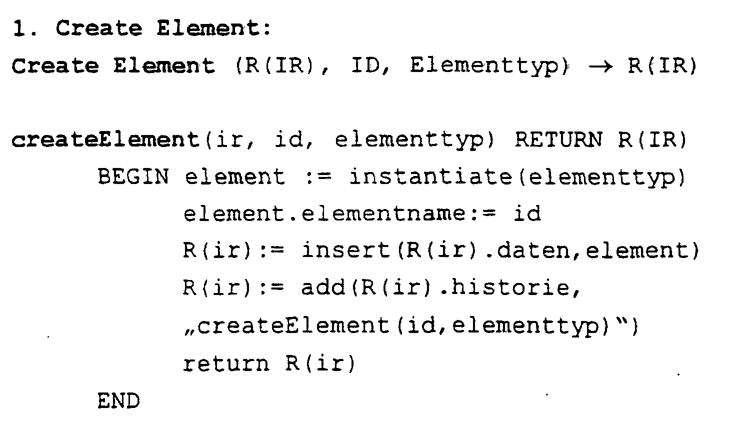

Diese Operation erzeugt ein Datenelement vom Datentyp elementtyp mit dem Identifikator id in einer Kopiedatenbank R(ir) innerhalb eines Informationsraums ir, auf den diese Operation angewendet wird. Dabei erhalten alle Eigenschaften des neu erzeugten Datenelementes einen vorgesetzten Initialisierungswert. Das neue Element wird nach dessen Initialisierung unter dem angegebenen Namen zu den Daten der Kopiedatenbank R(ir) und die ausgeführte Operation ohne den Informationsraum als Parameter in die der Kopiedatenbank zugeordneten

Historie R(ir).historie hinzugefügt. Die Erzeugung des eineindeutigen Identifiers id ist dabei von der die Operation versendenden Anwendung vorzunehmen.

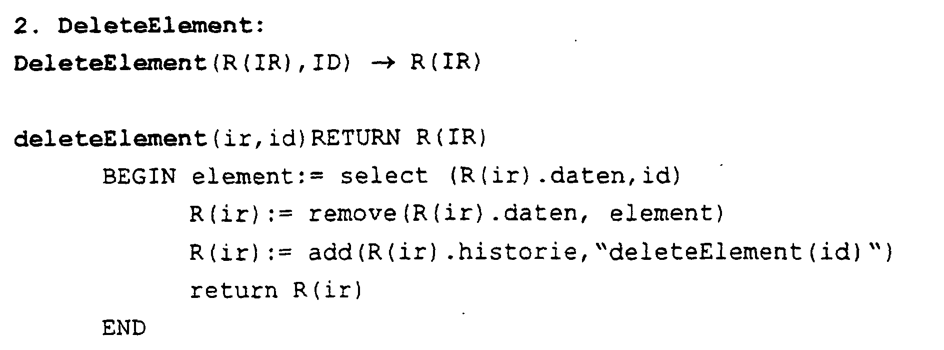

Diese Operation löscht ein Datenelement mit dem Namen id aus der Kopiedatenbank R(ir) des Informationsraums ir und schreibt die ausgeführte Operation in die der Kopiedatenbank zugeordneten Historie R(ir).historie. Alle seit der Instantiierung des Datenelements veränderten Eigenschaften des Datenelementes gehen dabei mit verloren. Die das Element betreffenden Beziehungen bleiben jedoch bestehen. Sollen diese ebenfalls gelöscht werden, so ist das Anwendungsprogramm dafür verantwortlich.

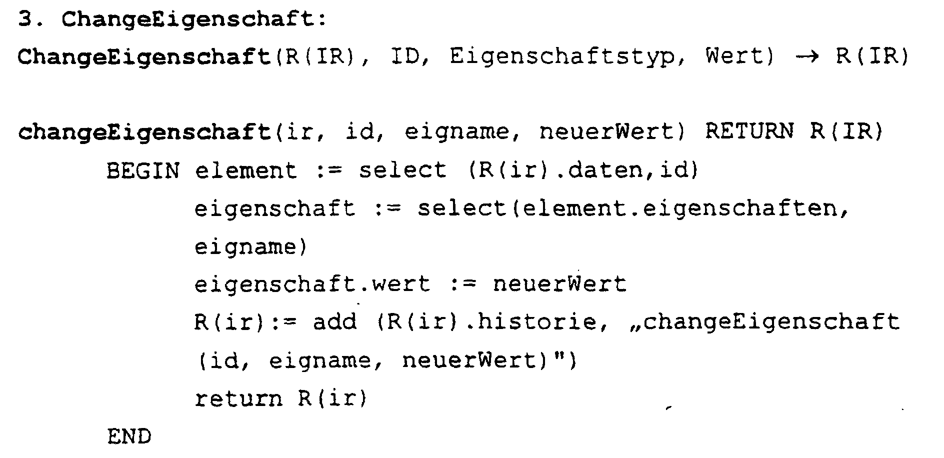

Diese Operation setzt in der Kopiedatenbank R(ir) des Informationsraums ir den Wert der Eigenschaft eigname des Datenelementes mit dem Identifier id auf den Wert neuerWert und schreibt die ausgeführte Operation in die der Kopiedatenbank zugeordneten Historie R(ir).historie.

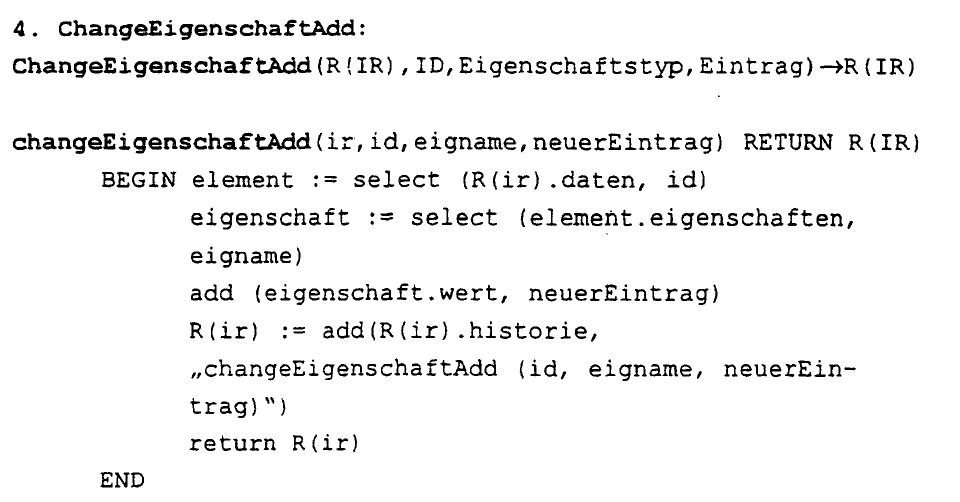

Diese Operation ist für Eigenschaften des Typs "aufzählung". Die Operation fügt in der Kopiedatenbank R(ir) des Informationsraums ir im Wert der Eigenschaft eigname des Datenelementes mit dem Identifier id am Ende der Aufzählung einen neuen Eintrag neuerEintrag hinzu. Anschließend wird die ausgeführte Operation in die der Kopiedatenbank zugeordneten Historie R(ir).historie gespeichert.

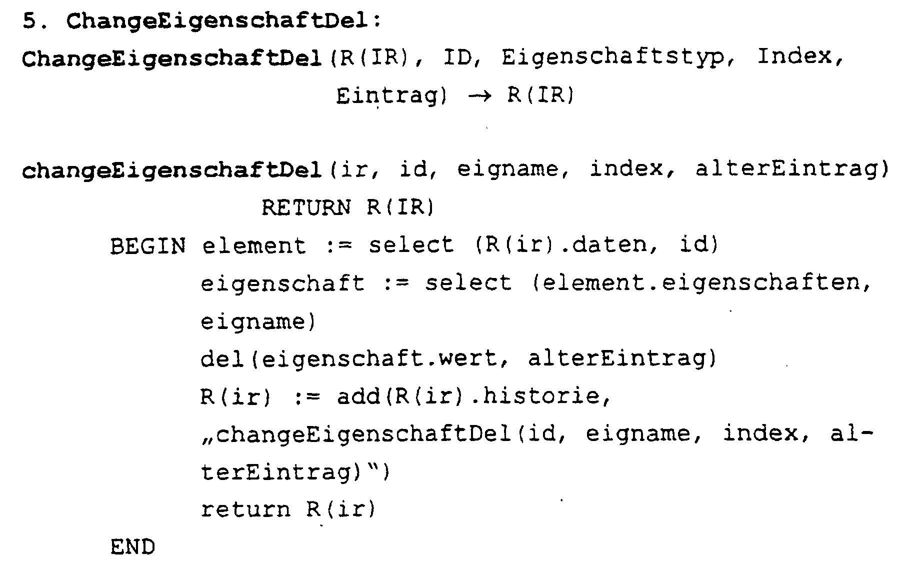

Diese Operation ist für Eigenschaften des Typs "aufzählung". Die Operation löscht in der Kopiedatenbank R(ir) des Informationsraums ir im Wert der Eigenschaft eigname des Datenelementes mit dem Identifier id den ersten in der Aufzählung auftretenden Eintrag alterEintrag. Danach wird die ausgeführte Operation in der der Kopiedatenbank zugeordneten Historie R(ir).historie gespeichert.

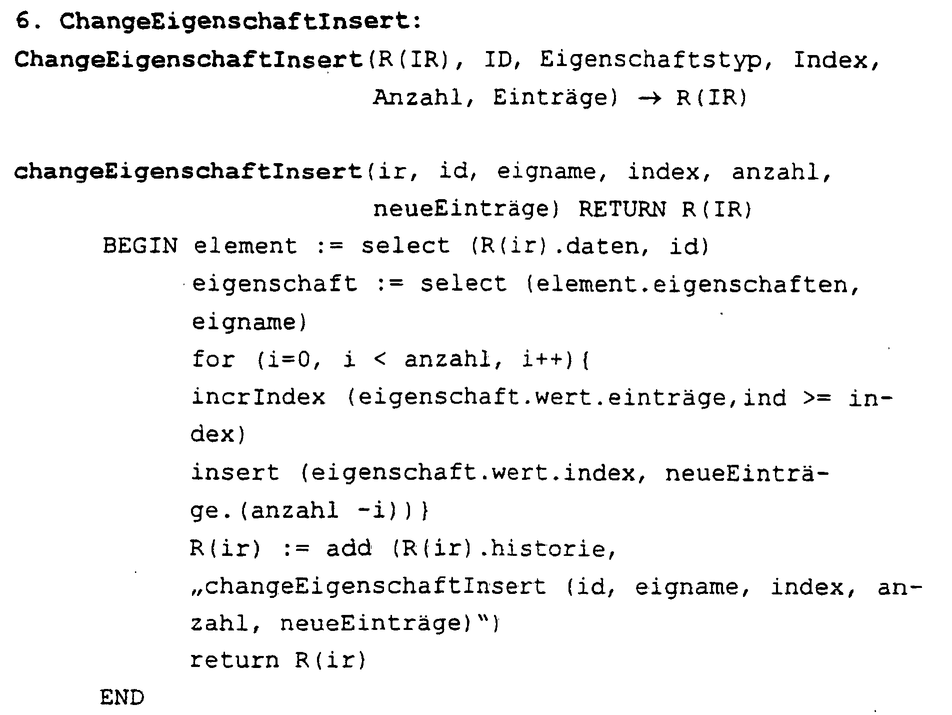

Eine Eigenschaft, auf die diese Operation angewendet werden kann, ist vom Typ "geordnete aufzählung". Diese Operation fügt in der Kopiedatenbank R(ir) des Informationsraumes ir im Wert der Eigenschaft eigname des Datenelementes mit dem Identifier id ab der Position Index in der geordneten Aufzählung Eigenschaft.Wert eine Anzahl anzahl neuer Einträge neueEinträge.i ein. Alle Einträge der geordneten Aufzählung eigenschaft.Wert mit einem gleichen oder größeren Index als index wird index um den Wert anzahl erhöht. Danach wird die ausgeführte Operation in der der jeweilige Kopiedatenbank zugeordneten Historie R(ir).historie, gespeichert.

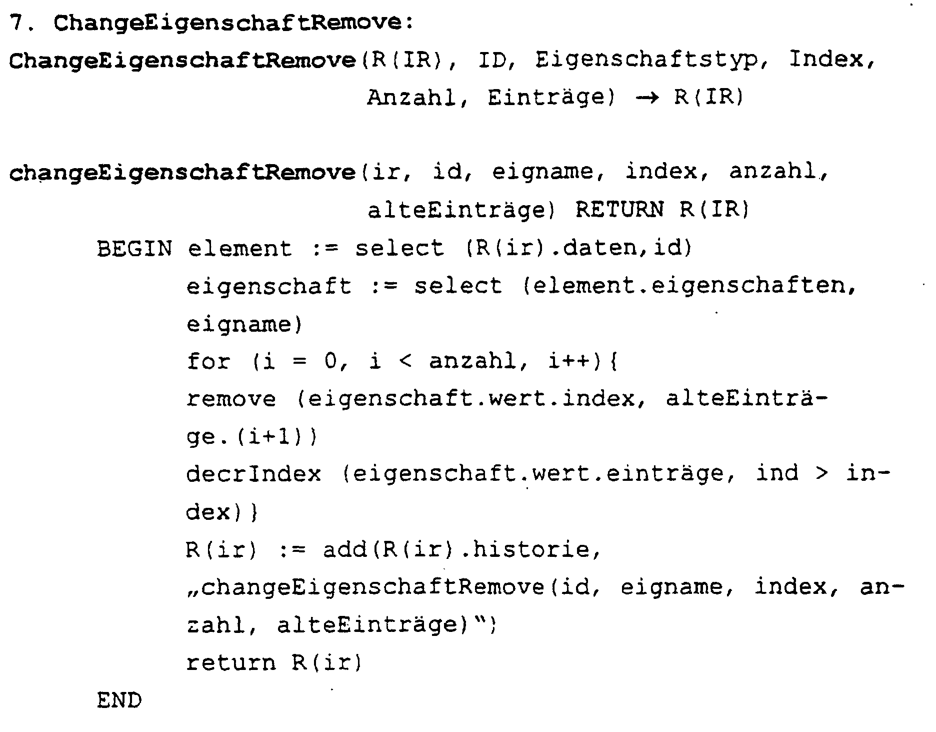

Eine Eigenschaft, auf die diese Operation angewendet werden kann, ist vom Typ "geordnete aufzählung". Diese Operation löscht in der Kopiedatenbank R(ir) des Informationsraumes ir im Wert der Eigenschaft eigname des Datenelementes mit dem Identifier id ab der Position Index in der geordneten Aufzählung Eigenschaft.Wert die Einträge alteEinträge. Alle Einträge mit größerem Index als (index + anzahl) werden um den Wert anzahl in ihrem Index verringert. Danach wird die ausgeführte Operation in der der jeweiligen Kopiedatenbank zugeordneten Historie R(ir).historie gespeichert.

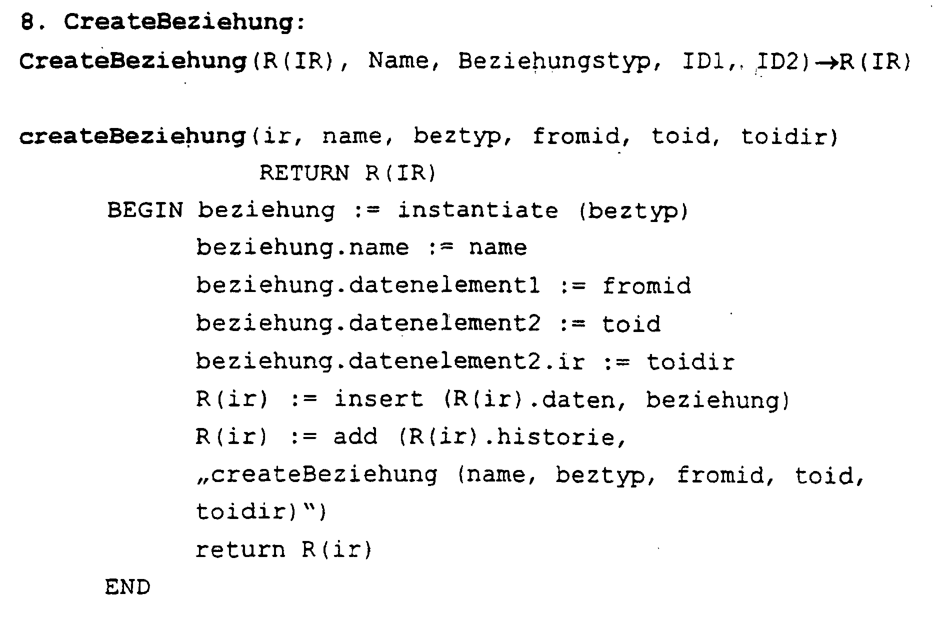

Diese Operation erzeugt eine Beziehung des Typs beztyp zwischen den Datenelementen mit den Identifiern fromid and toid unter dem Namen name und fügt die neue Beziehung zu den Daten der Kopiedatenbank R(ir) des Informationsraums ir hinzu. Danach wird die ausgeführte Operation in der der Kopiedatenbank zugeordneten Historie R(ir).historie gespeichert. Es wird für alle Beziehungen angenommen, daß es pro vergebenen Beziehungsnamen nur eine einzige Beziehung des gleichen Typs zwischen zwei Datenelementen gibt. Sind mehrere Beziehungen des gleichen Typs unter dem gleichen Namen zwischen zwei Datenelementen notwendig, so sind auch für Beziehungen Identifier einzuführen. Für die Mehrzahl der Anwendungen reicht die getroffene Annahme jedoch aus. Die Angabe des Informationsraumes des Zieldatenelementes ist nur im Falle einer logisch extern gerichteten Beziehung notwendig.

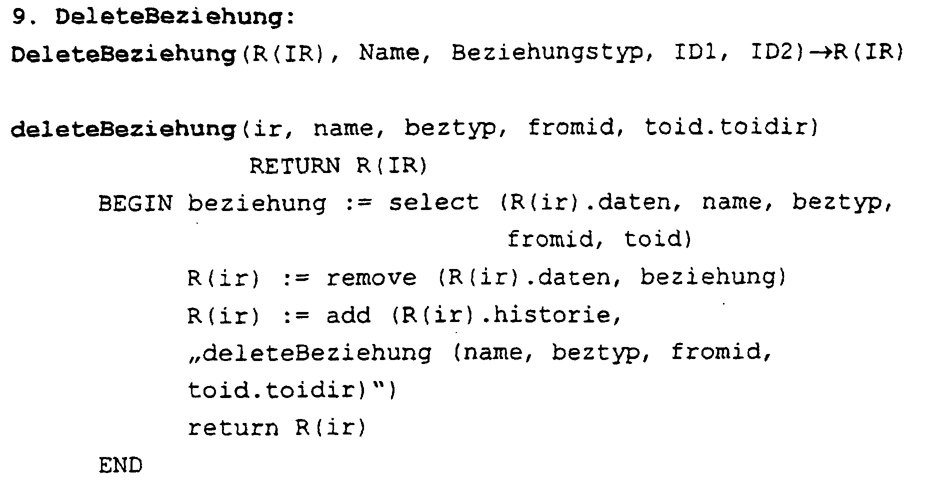

Diese Operation löscht eine Beziehung des Typs beztyp zwischen den Datenelementen mit den Identifiern fromid and toid unter dem Name name aus der Kopiedatenbank R(ir) des Informationsraumes ir. Danach wird die ausgeführte Operation in der der Kopiedatenbank zugeordneten Historie R(ir).historie gespeichert. Die Angabe des Informationsraums des Zieldatenelements ist nur für die Beziehungen vom Typ logisch extern gerichtet notwendig.

In einem weiteren Schritt werden alle Konflikte, Abhängigkeiten, Anomalien, Pseudo-Anomalien, sowie Einschränkungen durch Abhängigkeiten erkannt (Schritt 103).

Unter einem Konflikt ist die kleinste entscheidbare Menge von syntaktisch nur einseitig auftretenden Operationen, die eine Inkonsistenz eindeutig beschreiben und einem Nutzer oder dem System sinnvoll präsentiert und von ihm behoben (entschieden) werden können, zu verstehen.

Jeder Konflikt ist als Ganzes zu erkennen und durch eine einzige Entscheidung während der Reintegration lösbar.

Mögliche Konflikte werden anschließend abhängig von der Datenstruktur und den in der Historie vorkommenden Operationen definiert.

Es werden harmlose Konflikte und kritische Konflikte unterschieden.

Harmlose Konflikte (HK) beinhalten nur Operationen, die Veränderungen auf einer Kopiedatenbank beschreiben. Es gibt in diesem Fall somit nur einen Nutzer, der eine Änderung an dem Teil der Datenstruktur bzw. der Kopiedatenbank oder auch der Datenbank selbst wünscht und durchführt. Die vorgenommenen Operationen ergänzen sich somit. Äbhängig davon, welcher Kopiedatenbank die Operation bzw. Operationen zuzuordnen sind, können allgemein bei Vorhandensein der Kopiedatenbanken von Benutzern A und B harmlose Konflikte mit Operationen auf der Kopiedatenbank eines ersten Benutzers A als HKA und harmlose Konflikte mit Operationen auf der Kopiedatenbank eines zweiten Benutzers B als HKB bezeichnet werden.

Kritische Konflikte (KK) dagegen enthalten beidseitige Änderungen zum gleichen Teil der Datenstruktur und stellen konträre Ansichten der Benutzer über den letztendlichen Zustand bestimmter Daten innerhalb der Datenbank bzw. Kopiedatenbanken dar. Dabei kann ein kritischer Konflikt auch durch unterschiedliche Operationen auf zwei Kopiedatenbanken definiert werden. In diesen Fällen wird zwischen einem kritischen Konflikt KKA und einem kritischen Konflikt KKB unterschieden.

Formal wird ein Konflikt wie folgt definiert:

### Konflikt:

Ein Konflikt K zweier Historien EHA und EHB und einer gemeinsamen Historie GH ist ein 6-Tupel
K(EHA, EHB, GH) *def*
(id, ktyp, operationenEHA, operationenEHB,
operationenGH, entscheidungseinschr);
- id ist ein systemweit eineindeutiger Identifier (siehe auch die Definition eines Datenelements)
- ktyp ∈ {HK1A, ..., HK11A, HK1B, ..., HK11B, KK1, KK2, KK3A, KK3B, KK4, KK5A, KK5B, KK6, KK7, KK8A, KK8B}
- operationenEHA ∈ EHA.operationen;
- operationenEHB ∈ EHB.operationen;
- operationenGH ∈ GH.operationen;
- entscheidungseinschr ⊆ MENTktyp; wobei MENTktyp eine Menge aller möglichen Entscheidungen für einen Konflikt vom Typ ktyp ist.

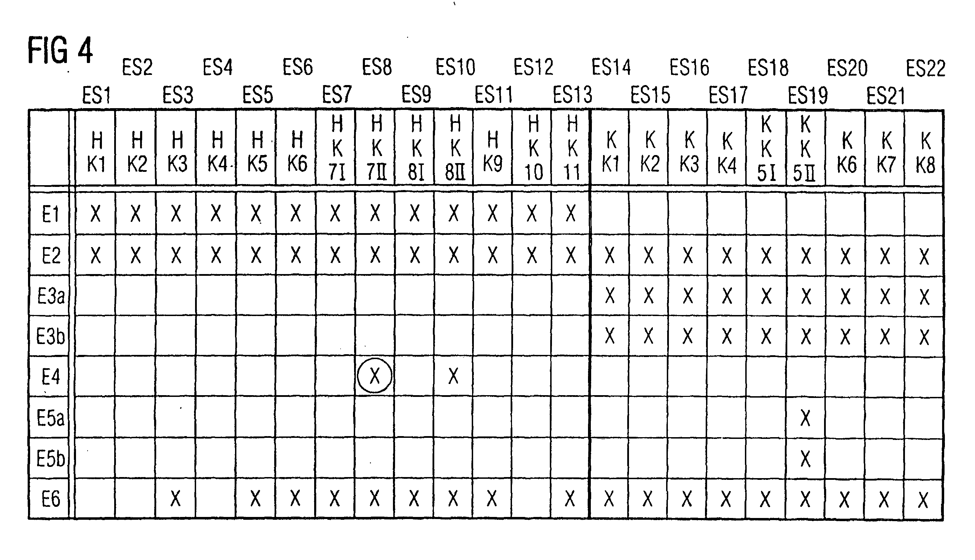

Die Konflikte sind in **Fig.4** dargestellt.
**1. Erster Harmloser Konflikt HK1:**
   - HK1 =: (createElement/ -- )
   Es liegt eine Erzeugungsoperation eines Datenelements createElement(id, elementtyp) in nur einer Historie vor.
   - HK1A =: createElement(id, elementtyp) ∈ EHA ∨
   - HK1B =: createElement(id, elementtyp) ∈ EHB.
**2. Zweiter Harmloser Konflikt HK2:**
   - HK2 =: (deleteElement/ -- )
   Es liegt eine Löschoperation zu einem Datenelement deleteelement(id, elementtyp) in nur einer Historie vor.
   - HK2A =: deleteElement(id, elementtyp) ∈ EHA ∨
   - HK2B =: deleteElement(id, elementtyp) ∈ EHB.
**3. Dritter Harmloser Konflikt HK3:**
   - HK3 =: (createBeziehung/ -- )
   Es liegt eine Erzeugungsoperation einer Beziehung createBeziehung (beztyp, bname, id1, id2) in nur einer Historie vor.
   - HK3A =: createBeziehung(beztyp, bname, id1, id2) ∈ EHA ∨
   - HK3B =: createBeziehung(beztyp, bname, id1, id2) ∈ EHB.
**4. Vierter Harmloser Konflikt HK4:**
   - HK4 =: (deleteBeziehung/ -- )
   Es liegt eine Löschoperation einer Beziehung deleteBeziehung(beztyp, bname, id1, id2) in nur einer Historie vor.
   - HK4A =: deleteBeziehung(beztyp,bname,id1,id2) ∈ EHA ∨
   - HK4B =: deleteBeziehung(beztyp,bname,id1,id2) ∈ EHB.
**5. Fünfter Harmloser Konflikt HK5:**
   - HK5 =: (deleteBeziehung12, createBeziehung 13/ -- )
   Es liegt eine Löschoperation einer Beziehung deleteBeziehung(beztyp, bname id1, id2) und eine nachfolgende Erzeugungsoperation der Beziehung createBeziehung(beztyp, bname, id1, id3) vom gleichen Quelldatenelement zu einem anderen Zieldatenelement nur einer Historie vor.
   - HK5A =: [deleteBeziehung(beztyp,bname,id1,id2),
   createBeziehung(beztyp,bname,id1,id3)] ∈ EHA ∨
   - HK5B =: [deleteBeziehung(beztyp,bname,id1,id2),
   createBeziehung(beztyp,bname,id1,id3)] ∈ EHB.
**6. Sechster Harmloser Konflikt HK6:**
   - HK6 =: (changeEigenschaft/ -- )
   Es liegt eine Änderungsoperation
   changeEigenschaft(id, name, wertneu, wertalt) zu einer Eigenschaft vom Typ "Wert" in nur einer Historie vor.
   - HK6A =: changeEigenschaft(id,name,wert1,wert0) ∈ EHA ∨
   - HK6B =: changeEigenschaft(id,name,wert1,wert0) ∈ EHB.
**7. Siebter Harmloser Konflikt HK7:**
   - HK7 =: (n x changeEigenschaftAdd/ -- )
   Es liegen n (n ist Element der natürlichen Zahlen und n > 0) Einfügeoperationen changeEigenschaftAdd(id, name, eintrag) mit dem gleichen Eintrag eintrag zur gleichen Eigenschaft vom Typ "aufzählung" eines Datenelements in einer Historie vor, wobei es in einer anderen Historie keine Löschoperation mit dem gleichen Eintrag zur gleichen Eigenschaft des Datenelements gibt. Die beschriebene Inkonsistenz besteht darin, daß in der Kopiedatenbank mit den Erzeugungsoperationen in der der Kopiedatenbank zugeordneten Historie n Einträge der Art eintrag mehr vorhanden sind als in der jeweils anderen Kopiedatenbank.
   - HK7A =: n mal changeEigenschaftAdd(id,name,eintrag) ∈ EHA ∨
   - HK7B =: n mal changeEigenschaftAdd(id,name,eintrag) ∈ EHB.
**8. Achter Harmloser Konflikt HK8:**
   - HK8 =: (n x changeEigenschaftDel/ -- )
   Es liegen n (n ist Element der natürlichen Zahlen) Löschoperationen changeEigenschaftDel(id, name, eintrag) mit dem gleichen Eintrag eintrag zu einer Eigenschaft vom Typ "aufzählung" eines Datenelements in einer Historie vor, wobei in einer anderen Historie keine Einfügeoperation mit dem gleichen Eintrag zu der Eigenschaft des Datenelements vorliegt. Die beschriebene Inkonsistenz besteht darin, daß in der Kopiedatenbank, in dessen Historie die Löschoperationen stehen, die n Einträge der Art eintrag weniger vorhanden sind, als in der jeweils anderen Kopiedatenbank.
   - HK8A =: n mal changeEigenschaftDel(id,name,eintrag) ∈ EHA ∨
   - HK8B =: n mal changeEigenschaftDel(id,name,eintrag) ∈ EHB.
**9. Neunter Harmloser Konflikt HK9:**
   - HK9 =: (changeEigenschaftInsert/ -- )
   Es liegt eine Einfügeoperation
   changeEigenschaftInsert(id, name, index1, 1, eintrag1) zu einem Index mit einem einzelnen Eintrag zu einer Eigenschaft vom Typ "geordnete aufzählung" eines Datenelementes in nur einer Historie vor, wobei in einer anderen Historie keine Einfügeoperationen mit einem anderen Eintrag zu nachrechenbarem gleichen Index zu der gleichen Eigenschaft des Datenelementes vorliegt.
   - HK9A =: changeEigenschaftInsert(id,name,index,1,eintrag) ∈ EHA ∨
   - HK9B =: changeEigenschaftInsert(id,name,index,1,eintrag) ∈ EHB.
**10. Zehnter Harmloser Konflikt HK10:**
   - HK10 =: (changeEigenschaftRemove/ -- )
   Es liegt eine Löschoperation
   changeEigenschaftRemove(id, name, index1, 1, eintrag1) zu einem Index mit einem einzelnen Eintrag zu einer Eigenschaft vom Typ "geordnete aufzählung" eines Datenelements in nur einer Historie vor.
   - HK10A =: changeEigenschaftIRemove(id,name,index,1,eintrag) ∈ EHA ∨
   - HK10B =: changeEigenschaftIRemove(id,name,index,1,eintrag) ∈ EHB.
**11. Elfter Harmloser Konflikt HK11:**
   - HK11 =: (changeEigenschaftRemove,changeEingenschaftInsert/--)
   Es liegt eine Löschoperation
   changeEigenschaftRemove(id, name, index1, 1, eintrag1) zu einem Index index mit einem einzelnen Eintrag zu einer Eigenschaft vom Typ "geordnete aufzählung" eines Datenelements und eine nachfolgende Erzeugungsoperation
   changeEigenschaftInsert (id, name, index1, 1, eintrag2) eines Eintrages zum gleichen Index der gleichen Eigenschaft des gleichen Datenelements in nur einer Historie vor.
   - HK11A =: [changeEigenschaftIRemove(id,name,index,1,eintrag1),
   changeEigenschaftIInsert(id,name,index,1,eintrag2)] ∈ EHA ∨
   - HK11B =: [changeEigenschaftIRemove(id,name,index,1,eintrag1),
   changeEigenschaftIInsert(id,name,index,1,eintrag2)] ∈ EHB.

Im weiteren wird eine Übersicht über kritische Konflikte (KK) d.h. Operationen in mehreren Historien, gegeben:
**1. Erster Kritischer Konflikt KK1:**
   - KK1 =: (createBeziehung12/ createBeziehung13)

   Es liegt eine Erzeugung einer Beziehung createBeziehung(beztyp, bname, id1, id2) in einer Historie vor, wobei in einer anderen Historie eine Erzeugung createBeziehung(beztyp, bname, id1, id3) der gleichen Beziehung (beztyp, bname) vom gleichen Quelldatenelement ausgehend aber zu einem anderen Zieldatenelement existiert.
      - KK1 =: createBeziehung(beztyp,bname,id1,id2) ∈ EHA ∧
      createBeziehung(beztyp,bname,id1,id3) ∈ EHB.
**2. Zweiter Kritischer Konflikt KK2:**
   - KK2 =: (deleteBeziehung12, createBeziehung13 /
   deleteBeziehung12, createBeziehung14)
   Die unterschiedliche Änderung einer Beziehung kann in den Historien wie der erste kritische Konflikt KK1 erkannt werden. Zusätzlich liegt jedoch in einer gemeinsamen Historie GH eine Löschung deleteBeziehung(beztyp, bname, id1, id2) der gemeinsamen Beziehung (bname, beztyp) vom gleichen Quelldatenelement, aber zu einem anderen Zieldatenelement vor.
   - KK2 =: deleteBeziehung(beztyp,bname,id1,id2) ∈ GH ∧
   createBeziehung(beztyp,bname,id1,id3) ∈ EHA ∧
   createBeziehung(beztyp,bname,id1,id4) ∈ EHB.
**3. Dritter Kritischer Konflikt KK3:**
   - KK3 =: (deleteBeziehung12, createBeziehung13/
   deleteBeziehung12)
   Die einseitige Veränderung und anderseitige Löschung einer Beziehung kann in den Historien wie der dritte harmlose Konflikt HK3 durch eine Operation
   createBeziehung(beztyp, bname, id1, id3) erkannt werden. Zusätzlich liegt jedoch in der gemeinsamen Historie eine Löschung
   deleteBeziehung (beztyp, bname, id1, id2) der gemeinsamen Beziehung (bname, beztyp) vom gleichen Quelldatenelement, aber zum letzten gemeinsamen Zieldatenelement vor.
   - KK3A =: deleteBeziehung(beztyp,bname,id1,id2) ∈ GH ∧
   createBeziehung(beztyp,bname,id1,id3) ∈ EHA;
   - KK3B =: deleteBeziehung(beztyp,bname,id1,id2) ∈ GH ∧ createBeziehung(beztyp,bname,id1,id3) ∈ EHB.
**4. Vierter Kritischer Konflikt KK4:**
   - KK4 =: (changeEigenschaft/ changeEigenschaft)
   Es liegt eine Änderungsoperation
   changeEigenschaft (id, name, wertneul, wertalt) zu einer Eigenschaft des Typs "wert" eines Datenelements in einer Historie vor, wobei in einer anderen Historie zur gleichen Eigenschaft des Datenelements eine andere Änderungsoperation existiert.
   - KK4 =: changeEigenschaft(id,name,wertneu1,wertalt) ∈ EHA ∧
   changeEigenschaft(id,name,wertneu2,wertalt) ∈ EHB.
**5. Fünfter Kritischer Konflikt KK5:**
   - KK5 =: (n changeEigenschaftAdd/ m changeEigenschaftDel)
   Es liegen n (n ist Element der natürlichen Zahlen) gleiche Operationen der Art
   changeEigenschaftAdd(id, name, eintrag) mit dem gleichen Eintrag zu einer Eigenschaft vom Typ "aufzählung" eines Datenelements in einer Historie vor, wobei in einer anderen Historie m (m ist Element der natürlichen Zahlen) gleiche Operationen der Art
   changeEigenschaftDel(id, name, eintrag) mit dem gleichen Eintrag zur gleichen Eigenschaft des Datenelements vorliegen. Die beschriebene Inkonsistenz besteht darin, daß in der Kopiedatenbank mit den Erzeugungsoperationen in der der Kopiedatenbank zugeordneten Historie n + m gleiche Einträge eintrag mehr vorhanden sind als in der anderen Kopiedatenbank. Um eine exakte Aussage über das Auftreten der Operationen treffen zu können, wird bei dem fünften kritischen Konflikt KK5 zwischen einem fünften kritischen Konflikt erster Art KK5A und einem fünften kritischen Konflikt zweiter Art KK5B unterschieden. Die Zuordnung erfolgt dabei über die Erzeugungsoperationen.
   - KK5A =: (n changeEigenschaftAdd(id,name,eintrag) ∈ EHA ∧
   m changeEigenschaftDel(id,name,eintrag) ∈ EHB ∨
   - KK5B =: (m changeEigenschaftDel(id,name,eintrag) ∈ EHA;
   n changeEigenschaftAdd(id,name,eintrag) ∈ EHB.
**6. Sechster Kritischer Konflikt KK6:**
   - KK6 =: (changeEigenschaftInsert / changeEigenschaftInsert)
   Es liegt eine Einfügeoperation
   changeEigenschaftInsert(id, name, index1, 1, eintrag1) zu einem Index mit einem einzelnen Eintrag zu einer Eigenschaft vom Typ "geordnete aufzählung" eines Datenelements in einer Historie vor, wobei in einer anderen Historie eine Einfügeoperation mit einem anderen Eintrag zum nachrechenbar gleichen Index der Eigenschaft des Datenelements vorliegt.
   - KK6 =: changeEigenschaftInsert(id,name,index1,1,eintrag1) ∈ EHA ∧
   changeEigenschaftInsert(id,name,index2,1,eintrag2) ∈ EHB.
**7. Siebter Kritischer Konflikt KK7:**
   - KK7 =: (changeEigRemove, changeEigInsert /
   changeEigRemove, changeEigInsert)
   Die beidseitig unterschiedliche Änderung eines einzelnen Eintrages an einem gemeinsamen Index index zu einer Eigenschaft vom Typ "geordnete aufzählung" eines Datenelementes ist in den Historien wie der sechste kritische Konflikt KK6 erkennbar. Zusätzlich liegt jedoch in der gemeinsamen Historie eine changeEigenschaftRemove(id, name, index1, 1, eintrag1)-Operation des letzten gemeinsamen Eintrages am nachrechenbar gleichen Index vor.
   - KK7 =: changeEigenschaftRemove(id,name,index1,1,eintrag1) ∈ GH ∧
   changeEigenschaftInsert(id,name,index2,1,eintrag2) ∈ EHA ∧
   changeEigenschaftInsert(id,name,index3,1,eintrag3) ∈ EHB.
**8. Achter Kritischer Konflikt KKB:**
   - KK8 =: (changeEigRemove, changeEigInsert / changeEigRemove)
   Die einseitige Änderung und anderseitige Löschung eines einzelnen Eintrages an einem gemeinsamen Index index zu einer Eigenschaft vom Typ "geordnete aufzählung" eines Datenelements in den Historien ist wie ein zehnter harmloser Konflikt HK10 erkennbar. Zusätzlich liegt jedoch in der gemeinsamen Historie eine
   changeEigenschaftRemove(id, name, index1, 1, eintrag1)-Operation des letzten gemeinsamen Eintrages am nachrechenbar gleichen Index vor.
   - KK8A =: changeEigenschaftRemove(id,name,index1,1,eintrag1) ∈ GH ∧
   changeEigenschaftInsert(id,name,index2,1,eintrag2) ∈ EHA;
   - KK8B =: changeEigenschaftRemove(id,name,index1,1,eintrag1) ∈ GH ∧
   changeEigenschaftInsertfid,name,index2,1,eintrag2) ∈ EHB.

Die in den Historien gespeicherten Operationen beschreiben die autonom veränderten Datenbereiche direkt und werden zur Beschreibung sowie zur im weiteren beschriebenen Behebung der Inkonsistenzen verwendet.

Zur Erkennung der Inkonsistenzen werden jeweils zwei Historien miteinander verglichen.

Die Erkennung der Inkonsistenzen erfolgt zu Beginn des Verfahrens, vor der eigentlichen Reintegration.

Die Suche nach den vorhandenen Inkonsistenzen in den Kopiedatenbanken durch die Suche nach Konfliktoperationen erfolgt in den im weiteren beschriebenen drei Schritten.
- In einem ersten Schritt werden die zwei miteinander zu vergleichenden Historien von den Kopiedatenbanken bzw. der Datenbank durchlaufen, die miteinander abgeglichen werden sollen. Alle Operationen der Historien werden auf jeder Seite getrennt jeweils einer der oben beschriebenen neuen Operationsmengen (createElement-Operationen, deleteElement-Operationen, createBeziehung-Operationen, delete-Beziehung-Operationen, changeEigenschaft-Operationen, changeEigenschaftAdd-Operationen, changeEigenschaftDel-Operationen, changeEigenschaftInsert-Operationen und ChangeEigenschaftRemove-Operationen) zugeordnet.
- In einem zweiten Schritt wird für jeden oben beschriebenen Konflikttyp HK1A, ..., HK11A, HK1B, ..., HK11B, KK1, KK2, KK3A, KK3B, KK4, KK5A, KK5B, KK6, KK7, KK8A, KK8B jeweils ein Konfliktregister KR angelegt. Dabei wird gewährleistet, daß alle Konflikte, bei denen Operationen aus beiden Historien zum jeweiligen Konflikt beitragen, nicht doppelt erkannt und doppelt in dem jeweiligen Konfliktregister KR abgelegt werden. Danach werden entsprechend den Definitionen der Konflikttypen, wie oben beschrieben, beginnend mit dem ersten harmlosen Konflikt HK1A in der Historie des ersten Benutzers A, die gerade gebildeten Operationsmengen durchsucht. Wurde ein Konflikt ermittelt, so wird der Konflikt im Konfliktregister KR des entsprechenden Konflikttyps abgelegt, beispielsweise wird der erste harmlose Konflikt HK1 in der Kopiedatenbank des ersten Benutzers A in einem Konfliktregister KR_HK1A abgelegt.
- Ist die Suche und Speicherung der Konflikte erfolgt, werden in einem dritten Schritt die zu Beginn erstellten Operationsmengen wieder gelöscht. Die nachfolgende Behebung der Inkonsistenzen beruht auf den in den Konfliktregistern KR abgelegten Konflikten und deren Operationen.

Ein Konfliktregister KR ist wie folgt definiert:

### Konfliktregister KR:

Ein Konfliktregister KR zweier Historien EHA und EHB und einer gemeinsamen Historie GH ist ein 2-Tupel
KR (EH_{A}, EH_{B}, GH) *def* (krtyp, konfliktids)
- krtyp ∈ {KA_HK1A, ..., KA_HK11A, KA_HK1B, ..., KA_HK11B, KA_KK1, KA_KK2, KA_KK3A, KA_KK3B, KA_KK4, KA_KK5A, KA_KK5B, KA_KK6, KA_KK7, KA_KK8A, KA_KK8B}
- konfliktids sind Identifier aller dem Konfliktregister KR zugeordneten Konflikte K(EHA, EHB, GH), wobei K.typ dem jeweiligen Konfliktarraytyp KR.krtyp zuzuordnen ist.

Eine Anomalie liegt dann vor, wenn zwei Datenelemente in beiden Kopiedatenbanken vor und nach der Teilung existieren und diese nach der Teilung durch eine gerichtete Beziehung vom gleichen Typ beztyp und mit gleichem Namen bname, jedoch mit vertauschtem Quelldatenelement und Zieldatenelement verbunden sind. Während der Reintegration muß mindestens eine dieser Beziehungen abgelehnt oder müssen beide verändert werden.

Unter einer gerichteten Beziehung ist eine Beziehung zu verstehen, die von einem Zieldatenelement zu einem Quelldatenelement gerichtet ist.

Eine Anomalie ist wie folgt definiert:

### Anomalie:

Eine Anomalie AM zweier Konflikte K1(EHA, EHB, GH) und K1(EHA, EHB, GH) ist ein 4-Tupel
AM(K1, K2) *def* (id, amtyp, kid1, kid2)
- id ist ein systemweit eineindeutiger Identifier (siehe auch Definition eines Datenelementes)
- amtyp ∈ {AnomalielA, ..., Anomalie16AB}
- kid1 = K1.id
- Kid2 = K2.id.

Ein Anomalieregister AMR zweier Historien ist wie folgt definiert:

### Anomalieregister AMR:

Ein Anomalieregister AMR zweier Historien EHA und EHB und einer gemeinsamen Historie GH ist ein 1-Tupel
AMR (EHA, EHB, GH) *def* (anomalieids)
- anomalieids sind die Identifier aller Anomalien der Historien EHA und EHB und der gemeinsamen Historie GH.

Pseudo-Anomalien beschreiben Situationen, in denen das Entstehen einer Anomalie aus vorliegenden Konflikten nur durch eine gezielte Minimierung der Entscheidungsmöglichkeiten der Konflikte vermieden werden kann.

Eine Pseudo-Anomalie ist, wie im folgenden dargestellt, definiert:

### Pseudo-Anomalie PAM:

Eine Pseudo-Anomalie PAM zweier Konflikte K1(EHA, EHB, GH) und K1(EHA, EHB, GH) ist ein 4-Tupel
PAM(K1, K2) *def* (id, pamtyp, kid1, kid2)
- id ist ein systemweit eineindeutiger Identifier (siehe auch Definition eines Datenelementes)
- pamtyp ∈ {Pseudo-Anomalie1A, ..., Pseudo-Anomalie32AB}
- kid1 = K1.id
- kid2 = K2.id.

Ein Pseudo-Anomalieregister PAMR ist wie folgt definiert:

### Pseudo-Anomalieregister PAMR:

Ein Pseudo-Anomalieregister PAMR zweier Historien EHA und EHB und einer gemeinsamen Historie GH ist ein 1-Tupel
PAMR(EHA, EHB, GH) *def* (Pseudo-Anomalieids)
- Pseudo-Anomalieids sind die Identifier aller Pseudo-Anomalien der Historien EHA und EHB sowie der gemeinsamen Historie GH.

Nach Ermittlung der Konflikte wird jeder ermittelte Konflikt jeweils durch.eine einzelne Entscheidung gelöst. Der Konfliktlösungsprozeß besteht somit aus einer Sequenz von Konfliktlösungsentscheidungen.

Die Konfliktlösung ist in **Fig.1** mit Schritt 104 bezeichnet.

Grundsätzlich gibt es verschiedene Entscheidungsmöglichkeiten:
a)Annahme der Konfliktoperation(en)
b)Ablehnung der Konfliktoperation(en)
c)Teilweise Annahme, teilweise Ablehnung der Konfliktoperation(en)
d)Ablehnung der Konfliktoperation(en), Anname neuer erzeugter Operation(en).

Den einzelnen Konflikttypen wird ein Entscheidungsset ES zugeordnet, wobei der Entscheidungsset ES mögliche Entscheidungen enthält, mit denen eine durch eine Operation des jeweiligen Konflikttyps, dem jeweils ein Entscheidungsset ES zugeordnet ist, erzeugte Inkonsistenz behoben werden kann.

In der **Fig.4** ist eine Zusammenstellung aller Entscheidungssets, die jeweils einem Konflikt zugeordnet sind, dargestellt.

Es wird jeweils in einer Zeile der in **Fig.4** dargestellten Tabelle eine mögliche Entscheidungsmöglichkeit E1, E2, E3a, E3b, E4, E5a, E5b, E6 dargestellt.

Mit einem x in einem Feld ist jeweils bezeichnet, daß der jeweils in der Spalte aufgeführte Konflikt durch eine Entscheidungsmöglichkeit, die in der jeweiligen Zeile dargestellt ist, gelöst werden kann.

Im weiteren wird eine Übersicht über die möglichen Entscheidungsmöglichkeiten gegeben:

Eine erste Entscheidungsmöglichkeit E1 beschreibt die Annahme einer Konfliktoperation oder mehrerer Konfliktoperationen.

Eine Konfliktoperation beschreibt alle zu einem Konflikt gehörenden Datenoperationen. Unter Annahme wird verstanden, daß die Konfliktoperationen in der Kopiedatenbank, in der sie noch nicht vorgenommen worden sind, ausgeführt werden.

Eine zweite Entscheidungsmöglichkeit E2 beschreibt die Ablehnung einer Konfliktoperation oder mehrerer Konfliktoperationen.

Eine dritte Entscheidungsmöglichkeit E3 beschreibt die Annahme einer oder mehrerer Konfliktoperationen(en) in einer Kopiedatenbank und die Ablehnung der Konfliktoperation(en) in der anderen Kopiedatenbank.

Für die dritte Entscheidungsmöglichkeit E3 ist eine Detailentscheidung vorgesehen, die definiert, welche der in den Historien verschiedener Kopiedatenbanken der Benutzer A und B vorliegenden Konfliktoperationen angenommen und welche abgelehnt werden sollen.

Diese Entscheidungsmöglichkeiten werden als erster Teil E3a der dritten Entscheidungsmöglichkeit E3 und zweiter Teil E3b der dritten Entscheidungsmöglichkeit E3 bezeichnet. Der erste Teil E3a der dritten Entscheidungsmöglichkeit E3 beschreibt die Annahme der Konfliktoperation(en) in der Kopiedatenbank des ersten Benutzers A und die Ablehnung der Konfliktoperation(en) in der Kopiedatenbank des zweiten Benutzers B. Der zweite Teil E3b der dritten Entscheidungsmöglichkeit E3 beschreibt die Annahme der Konfliktoperation(en) der Kopiedatenbank des zweiten Benutzers B und die Ablehnung der Konfliktoperation(en) der Kopiedatenbank des ersten Benutzers A.

Wie in **Fig.4** dargestellt, beschreibt ein erster Entscheidungsset ES1, der dem ersten harmlosen Konflikt HK1 zugeordnet ist, die erste Entscheidungsmöglichkeit E1 sowie die zweite Entscheidungsmöglichkeit E2 zur Erhebung des ersten harmlosen Konflikts HK1.

Ein zweiter Entscheidungsset ES2 ist dem zweiten harmlosen Konflikt HK2 zugeordnet und enthält wiederum die erste Entscheidungsmöglichkeit E1 sowie die zweite Entscheidungsmöglichkeit E2 zur Behebung des zweiten harmlosen Konflikts HK2.

Entsprechen die bisherigen Lösungsmöglichkeiten durch ein Annehmen oder Ablehnen vorhandener Konfliktoperationen nicht den Zielvorstellungen der Benutzer bezüglich der letztendlichen reintegrierten Datenbank, d.h. können die Benutzer A und B sich nicht auf eine durch die Konflikte beschriebenen Zustände einigen, so gibt es die Möglichkeit der Annahme einer Zwischenlösung oder die Möglichkeit der Auswahl und Annahme neuer, nicht im Entscheidungsset enthaltener Operationen. Beide Möglichkeiten sollen nachfolgend dargestellt werden.

Für einen Konflikt mit einer Anzahl n den Konflikt definierenden, gleichen Operationen aus einem Set an Datenoperationen in nur einer Historie (Konflikte der Typen HK7 II und HK8 II) gibt es generell im weiteren beschriebene Auswahlmöglichkeiten von Zwischenzuständen.

Für den siebten harmlosen Konflikt HK7 mit n = 1 wird nachfolgend HK7 I und für den siebten harmlosen Konflikt HK7 mit n > 1 wird nachfolgend HK7 II geschrieben. Für den achten harmlosen Konflikt HK1 mit m = 1 wird nachfolgend HK8 I und für den achten harmlosen Konflikt HK8 mit n > 1 wird nachfolgend HK8 II geschrieben.

Eine vierte Entscheidungsmöglichkeit E4 beschreibt dabei eine teilweise Annahme und teilweise Ablehnung der Konfliktoperationen.

Für die vierte Entscheidungsmöglichkeit E4 ist eine Präzisierung vorgesehen, die definiert, wieviele der einseitig auftretenden Konfliktoperationen angenommen und wieviele abgelehnt werden sollen. Die Entscheidungsmöglichkeiten reichen bei einer Anzahl von n Operationen (n ist Element der natürlichen Zahlen), von einer Annahme einer Operation und einer Ablehnung von n-1 Operationen bis zu einer Annahme von n-1 und einer Ablehnung von einer Operation. Als Entscheidungsmöglichkeit reicht dabei aus, die Anzahl k (0 < k < n) der angenommenen Operationen zu definieren. Die Anzahl der abgelehnten Operationen errechnet sich dann aus n - k. Die vierte Entscheidungsmöglichkeit E4 kann somit folgendermaßen spezialisiert werden: Die vierte Entscheidungsmöglichkeit E4 beschreibt die Anzahl der angenommenen Konfliktoperationen k.

Im weiteren wird der fünfte kritische Konflikt KK5 mit n = m = 1 nachfolgend mit KK5 I und für den fünften kritischen Konflikt KK5 mit n > 1 und m > 1 nachfolgend KK5 II bezeichnet.

Für einen fünften kritischen Konflikt KK5 II mit einer Anzahl n den Konflikt definierenden, gleichen Operationen changeEigenschaftAdd bei einer Kopiedatenbank und einer Anzahl m den Konflikt definierenden gleichen Operationen changeEigenschaftDel in einer anderen Kopiedatenbank gestaltet sich die Auswahl der Zwischenzustände schwieriger.

Da die den Konflikt definierenden Operationen in der einen Historie und die am Konflikt beteiligten Operationen in der anderen Historie einander auslöschend sind, kann das gleiche Endergebnis durch verschiedene Entscheidungsmöglichkeiten getroffen werden.

So kann die Rücksetzung einer changeEigenschaftAdd-Operation und die Annahme einer changeEigenschaftAdd-Operation in der einen Kopiedatenbank verbunden mit der Rücksetzung einer changeEigenschaftDel-Operation bei einer anderen Kopiedatenbank das gleiche Ergebnis erzielen, wie die Annahme zweier changeEigenschaftAdd-Operationen der einen Kopiedatenbank und einer changeEigenschaftDel-Operation bei der anderen Kopiedatenbank. Damit alle Entscheidungsmöglichkeiten zwischen den Extrema Ablehnung der Operationen der einen Kopiedatenbank und Annahme der Operationen bei der anderen Kopiedatenbank (dritte Entscheidungsmöglichkeit E3a/E3b) gegeben sind, gleichzeitig aber vermieden wird, daß verschiedene Entscheidungsmöglichkeiten ein gleiches Ergebnis liefern, gibt es die unten aufgeführte Lösungsmöglichkeit der fünften Entscheidungsmöglichkeit E5.

Die fünfte Entscheidungsmöglichkeit E5 kann durch Ablehnung aller Operationen den letzten gemeinsamen Stand zwischen den Kopiedatenbanken erzeugen und ermöglicht alle anderen Endzustände aus den Kombinationen der Operationen, jedoch ohne die oben vorliegenden Konfliktzustände.

Die fünfte Entscheidungsmöglichkeit E5 beschreibt also die teilweise Annahme und teilweise Ablehnung der Konfliktoperationen bei einer Kopiedatenbank und die Ablehnung der Konfliktoperationen bei einer anderen Kopiedatenbank.

Für die fünfte Entscheidungsmöglichkeit E5 sind die Teilentscheidungsmöglichkeiten notwendig, die einerseits definieren, welche Kopiedatenbank von der teilweisen Annahme und teilweisen Ablehnung und welche Datenbank von der vollständigen Ablehnung betroffen ist und andererseits, wieviele der Konfliktoperationen bei einer teilweisen Annahme angenommen und wieviele abgelehnt werden sollen. Die Definition der Anzahl an Operationen bei teilweiser Annahme und teilweiser Ablehnung kann dabei wie bei der vierten Entscheidungsmöglichkeit E4 über die alleinige Definition der Anzahl der angenommenen Operationen erfolgen. Die Anzahl der angenommenen Operationen in einer ersten Kopiedatenbank des ersten Benutzers A werden dabei mit i und die Anzahl der angenommenen Operationen der Kopiedatenbank des zweiten Benutzers B mit k bezeichnet. Somit sind Detailentscheidungen der fünften Entscheidungsmöglichkeit E5:
Erster Teil E5a der fünften Entscheidungsmöglichkeit E5:
   Anzahl der angenommenen Konfliktoperationen der Kopiedatenbank des ersten Benutzers A:
   (1 < i < n), wenn es sich um eine changeEigAdd-Operation handelt,
   (1 < k < m), wenn es sich um eine changeEigDel-Operation handelt, und Ablehnung aller Konfliktoperationen der Kopiedatenbank des zweiten Benutzers B.

Zweiter Teil E5b der fünften Entscheidungsmöglichkeit E5:
Anzahl der angenommenen Konfliktoperationen der Kopiedatenbank des zweiten Benutzers B:
(1 < i < n), wenn es sich um eine changeEigAdd-Operation handelt,
(1 < k < m), wenn es sich um eine changeEigDel-Operation handelt und Ablehnung aller Konfliktoperationen der Kopiedatenbank des ersten Benutzers A.

Eine Auswahlmöglichkeit für die Erzeugung eines neuen Zustandes bzgl. des Konfliktes wird durch die nachfolgenden Entscheidungsmöglichkeiten definiert werden.

Generell ist die Möglichkeit der Erzeugung und Auswahl eines sich von den beiden vorliegenden Versionen unterscheidenden Zustandes für alle Konflikte außer den Konflikten des Typs HK1, HK2, HK4, HK10 gegeben.

Für eine Erzeugung eines neuen Zustandes bedarf es der Schaffung einer gemeinsamen Ausgangsposition, d.h. die betreffende(n) Operation(en) müssen abgelehnt und beide Kopiedatenbanken bezüglich der von dem Konflikt betroffenen Datenstruktur konsistent gemacht werden. Diese Ablehnung der Operationen ist bei sich überschreibenden Operationen des Typs changeEigenschaft() (HK6, HK4) nicht erforderlich, da die mit dem neuen Zustand erzeugte Operation die alten Operationen direkt überschreibt.

Für einen Konflikt mit einer den Konflikt definierenden Operation aus dem Set an Datenoperationen (Konflikte der Typen HK3, HK6, HK7 I, HK8 I und HK9), für einen Konflikt mit mehreren den Konflikt definierenden Operationen aus dem Set an Datenoperationen bei nur einer Kopiedatenbank (Konflikte der Typen HK5, HK7 II, HK8 II, HK11) sowie für einen Konflikt mit mindestens einer den Konflikt definierenden Operation aus dem Set an Datenoperationen bei beiden Kopiedatenbanken (Konflikte der Typen KK1, ..., KK8) gibt es folgende Lösungsmöglichkeit, die als sechste Entscheidungsmöglichkeit E6 bezeichnet wird.

Die sechste Entscheidungsmöglichkeit E6 beschreibt die Ablehnung der Konfliktoperation(en) und Auswahl neuer Operation(en).

Für die beidseitige Änderung einer Beziehung (KK2) oder die beidseitige Änderung eines Eintrages in einer geordneten Aufzählung (KK7) bezieht sich die Ablehnung dabei, im Gegensatz zur zweiten Entscheidungsmöglichkeit E2 (Ablehnung aller Operationen) nur auf die Erzeugeroperationen der neuen Beziehungen bzw. der neuen Einträge. Die gemeinsame Löschoperation der alten Beziehung oder des alten Eintrages bleibt unberührt. Für den dritten kritischen Konflikt KK3 und den achten kritischen Konflikt KK8 gibt es bei der sechsten Entscheidungsmöglichkeit E6 nur die Möglichkeit, die createBeziehung-Operation oder die changeEigenschaftInsert-Operation zu ändern. Die gemeinsame Löschoperation bleibt unberührt.

Für die Definition eines neuen Zustandes eines Konflikts vom Typ HK7, HK8 oder KK5 werden die Anzahl der
changeEigenschaftAdd-Operationen und
changeEigenschaftDel-Operationen ebenfalls mit i und k beschrieben
(i, wenn es sich um changeEigAdd-Operationen handelt und
k, wenn es sich um changeEigDel-Operationen handelt).

Für die Auswahl eines neuen Zustandes und die Erzeugung der dafür notwendigen Operationen sind Interaktionen auf der Oberfläche des Anwendungsprogramms üblich. Besteht die Möglichkeit einer Auswahl eines neuen Zustandes nur über eine komplexe Interaktion und betreffen die durch die Interaktion erzeugten Operationen auch noch andere, nicht gelöste Konflikte, so besteht die Möglichkeit
a)mit dem Entscheidungsset die anderen betroffenen Konflikte ebenfalls zu lösen oder
b)die Erzeugung des neuen Zustandes auf einen späteren Zeitpunkt, d.h. nach der Reintegration und während der gekoppelten Weiterarbeit zu verschieben.

Sollen nach a) andere betroffene Konflikte ebenfalls gelöst werden, so ist vorher die Ablehnung der Operationen des Konfliktsets notwendig, wenn es sich um. Konflikte vom Typ HK6 und KK4 handelt und die Operationen keine sich überschreibenden Operationen sind.

**Fig.4** zeigt die Entscheidungssets ES1, ES2, ES3, ES4, ES5, ES6, ES7, ES8, ES9, ES10, ES11, ES12, ES13, ES14, ES15, ES16, ES17, ES18, ES19, ES20, ES21, ES22, die den jeweiligen Konflikten zugeordnet sind.

Dem sechsten harmlosen Konflikt HK6 ist ein sechster Entscheidungsset ES6 zugeordnet, der die erste Entscheidungsmöglichkeit E1, die zweite Entscheidungsmöglichkeit E2 sowie die sechste Entscheidungsmöglichkeit E6 enthält.

Ein zwölftes Entscheidungsset ES12 ist dem ersten kritischen Konflikt KK1 zugeordnet. Der zwölfte Entscheidungsset ES12 enthält vier mögliche Entscheidungen, die zweite Entscheidungsmöglichkeit E2, den ersten Teil E3a der dritten Entscheidungsmöglichkeit E3, den zweiten Teil E3b der dritten Entscheidungsmöglichkeit E3 sowie die sechste Entscheidungsmöglichkeit E6.

Die weiteren Entscheidungssets sind in **Fig.4** dargestellt und sollen zur Vereinfachung im folgenden anhand der folgenden Liste dargestellt werden:
- Dem ersten harmlosen Konflikt HK1, dem zweiten harmlosen Konflikt HK2, dem vierten harmlosen Konflikt HK4 sowie dem zehnten harmlosen Konflikt HK10 sind jeweils Entscheidungssets zugeordnet, die die erste Entscheidungsmöglichkeit E1 sowie die zweite Entscheidungsmöglichkeit E2 umfassen.
- Dem dritten harmlosen Konflikt HK3, dem fünften harmlosen Konflikt HK5, dem sechsten harmlosen Konflikt HK6, dem ersten Typ HK7 I des siebten harmlosen Konflikts HK7, dem ersten Typ HK8 I des achten harmlosen Konflikts HK8, dem neunten harmlosen Konflikt HK9 sowie dem elften harmlosen Konflikt HK11 sind jeweils Entscheidungssets zugeordnet, die die erste Entscheidungsmöglichkeit E1, die zweite Entscheidungsmöglichkeit E2 sowie die sechste Entscheidungsmöglichkeit E6 enthalten.
- Dem zweiten Typ HK7 II des siebten harmlosen Konflikts HK7, dem zweiten Typ HK8 II des achten harmlosen Konflikts HK8, dem ersten kritischen Konflikt KK1, dem zweiten kritischen Konflikt KK2, dem dritten kritischen Konflikt KK3, dem vierten kritischen Konflikt KK4, dem ersten Typ KK5 I des fünften kritischen Konflikts KK5, dem sechsten kritischen Konflikt KK6, dem siebten kritischen Konflikt KK7 und dem kritischen Konflikt KK8 sind jeweils Entscheidungssets zugeordnet, die die zweite Entscheidungsmöglichkeit E2, den ersten Teil E3a der dritten Entscheidungsmöglichkeit E3, den zweiten Teil E3b der dritten Entscheidungsmöglichkeit E3 sowie die sechste Entscheidungsmöglichkeit E6 enthalten.
- Dem zweiten Typen KK5 II des fünften kritischen Konflikts KK5 ist ein Entscheidungsset mit sechs möglichen Entscheidungen, der zweiten Entscheidungsmöglichkeit E2, dem ersten Teil E3a der dritten Entscheidungsmöglichkeit E3, dem zweiten Teil E3b der dritten Entscheidungsmöglichkeit E3, dem ersten Teil E5a der fünften Entscheidungsmöglichkeit E5, dem zweiten Teil E5b der fünften Entscheidungsmöglichkeit E5 sowie der sechsten Entscheidungsmöglichkeit E6, zugeordnet.
- Dem zweiten Typ HK7 II des siebten harmlosen Konflikts HK7 und dem zweiten Typ HK8 II des achten harmlosen Konflikts HK8 ist jeweils ein Entscheidungsset mit vier möglichen Entscheidungen, der ersten Entscheidungsmöglichkeit E1, der zweiten Entscheidungsmöglichkeit E2, der vierten Entscheidungsmöglichkeit E4 sowie der sechsten Entscheidungsmöglichkeit E6 zugeordnet.

### Einschränkungen von Entscheidungsmöglichkeiten

Es ist zu bemerken, daß die korrekte Ausführung einzelner Entscheidungen zum Vorhandensein eines Datenelements oder mehrerer Datenelemente in beiden Kopiedatenbanken abhängig ist.

Beispielsweise müssen für eine Annahme bei dem dritten harmlosen Konflikt HK3A beide in der Beziehungsoperation in Konflikt über ihre Identifier bezeichneten Datenelemente auch in der Kopiedatenbank des Benutzers B vorhanden sein. Fehlt eines der Datenelemente oder fehlen gar beide, so ist diese Entscheidung über eine Annahme der Operation nicht möglich.

Somit ist erkennbar, daß zwischen einzelnen Konflikten Abhängigkeiten bestehen können.

Eine Abhängigkeit eines Konflikts zu Konflikten des Typs HK1A, HK1B, HK2A oder HK2B bezüglich seiner Entscheidungsmöglichkeiten ist wie folgt definiert:

### Abhängiger Konflikt:

Ein Konflikt ist von dem ersten harmlosen Konflikt HK1 oder dem zweiten harmlosen Konflikt HK2 dann abhängig, wenn seine Entscheidungsmöglichkeiten durch das Vorhandensein eines ersten harmlosen Konflikts HK1 oder eines zweiten harmlosen Konflikts HK2 eingeschränkt werden.

Eine Abhängigkeit AK eines Konflikts ist wie folgt definiert:

### Abhängigkeit AK eines Konflikts:

Eine Abhängigkeit AK eines Konfliktes K1(EHA, EHB, GH) von einem Konflikt K1(EHA, EHB, GH) ist ein 4-Tupel
AK (K1, K2) *def* (id, ktyp, kid1, kid2)
- id ist ein systemweit eineindeutiger Identifier(siehe auch Definition eines Datenelementes)
- ktyp ∈ {HK1A, HK1B, HK2A, HK2B}
- kid1 = K1.id
- kid2 = K2.id.

Ein Abhängigkeitsregister AKR ist wie folgt definiert:

### Abhängigkeitsregister AKR:

Ein Abhängigkeitsregister AKR zweier Historien EHA und EHB und einer gemeinsamen Historie GH ist ein 1-Tupel
AKR (EH_{A}, EH_{B}, GH) *def* (abhängigkeitsids)
- abhängigkeitsids sind die Identifier aller erkannten Abhängigkeiten der Historien EH_{A} und EH_{B} und der gemeinsamen Historie GH.

Alle Einschränkungen von Entscheidungsmöglichkeiten durch vorhandene Konflikte des ersten harmlosen Konflikts HK1 und des zweiten harmlosen Konflikts HK2 werden zu Beginn der Konfliktlösung auf der Grundlage der Abhängigkeiten AK erkannt und markiert.

Dazu dient der in der Konfliktdefinition für jeden Konflikt eingeführte Parameter der Entscheidungseinschränkungen. Nachfolgend werden alle möglichen Einschränkungen beschrieben.

Der erste harmlose Konflikt HK1 beeinträchtigt die Entscheidungsmöglichkeiten von Konflikten mit Operationen innerhalb der eigenen Historie. Zu diesen abhängigen Konflikten gehören alle, die eine createBeziehung-Operation oder eine Eigenschaftsänderung mit dem erzeugten Datenelement enthalten. Dabei werden bei harmlosen Konflikten HK6, ..., HK11 mit Eigenschaftsoperationen zu diesem Datenelement die Entscheidungen um eine Annahme und eine Erzeugung eines neuen Zustandes minimiert.

Die Entscheidungsmöglichkeiten der kritischen Konflikte KK1, KK2 und KK3 mit Beziehungsoperationen mit dem erzeugten Datenelement werden um die Möglichkeit der Annahme der Operationen (-E3a, -E3b) der Kopiedatenbank reduziert, in dessen Historie die createElement-Operation steht. Die Entscheidungsmöglichkeiten für den dritten harmlosen Konflikt HK3 und den fünften harmlosen Konflikt HK5 mit Beziehungsoperationen mit dem erzeugten Datenelement werden um die Entscheidung der Übernahme und/oder der Erzeugung eines neuen Zustandes reduziert. Kritische Konflikte mit Eigenschaftsoperationen erfahren keine Veränderungen ihrer Entscheidungsmenge (Entscheidungssets).

Ein zweiter harmloser Konflikt HK2 beeinträchtigt die Entscheidungsmöglichkeit von Konflikten beider Kopiedatenbanken. Die harmlosen Konflikte zur Veränderung von Eigenschaften HK6, ..., HK11 werden wie bei dem ersten harmlosen Konflikt HK1 behandelt. Die harmlosen Konflikte mit Beziehungsoperationen (HK4, HK5) in der Historie der deleteElement-Operation besitzen keine Entscheidungsmöglichkeit zur Ablehnung mehr und die Entscheidungen zur harmlosen Beziehungskonflikten der anderen Kopiedatenbank HK3, HK5 werden um die Möglichkeit der Übernahme und/oder Erzeugung eines neuen Zustandes minimiert. Die kritischen Konflikte mit Beziehungsoperationen der Kopiedatenbank ohne die deleteElement-Operation werden um die Möglichkeit des Rücksetzens und/oder der Annahme der Operationen reduziert. Kritische Konflikte mit Eigenschaftsoperationen erfahren auch hier keine Veränderung ihrer Entscheidungsmenge.

Eine gemeinsame deleteElement-Operation, die in der gemeinsamen Historie GH enthalten ist und keinen Konflikt darstellt, verringert in speziellen Fällen die Entscheidungsmöglichkeiten. So können alle kritischen Konflikte KK2 und KK3 mit Beziehungsoperationen, in denen das Zieldatenelement der gemeinsamen deleteBeziehung-Operation dem beidseitig gelöschten Datenelement entspricht, nicht mehr rückgesetzt werden.

Abhängige Konflikte mit einer oder mehreren Beziehungsopertionen (HK3, HK4, HK5, KK1, KK2, KK3), d.h. mit mehreren verzeichneten Identifiern und damit mehreren beteiligten Datenelementen, können gleichzeitig mehrere Abhängigkeiten aufweisen. Dabei kann es pro auftretenden Identifier in einem Konflikt nur eine Abhängigkeit geben. Ein abhängiger Konflikt mit mehreren Identifiern kann einerseits mehrere Abhängigkeiten zu Konflikten desselben Konflikttyps (zum Beispiel zu zwei Konflikten des ersten harmlosen Konflikts HK1a) und andererseits mehrerer Abhängigkeiten zu Konflikten unterschiedlicher Konflikttypen (z.B. zu einem Konflikt vom Typ HK1a und zu einem Konflikt vom Typ HK1b) aufweisen. Beispielsweise kann ein abhängiger Konflikt vom Typ HK3a zwei Abhängigkeiten zu zwei Konflikten des Typs HK1a haben, nämlich eine mit dem Identifier id1 und eine mit dem Identifier id2. Der zweite kritische Konflikt KK2 kann gleichzeitig eine Abhängigkeit zu dem zweiten harmlosen Konflikt HK2a, zu dem ersten harmlosen Konflikt HK1a und zu dem ersten harmlosen Konflikt HK1B aufweisen.

Durch die Abhängigkeit der Identifier zu einem Konflikt vom Typ HK1 oder HK2 kann es maximal pro Konflikt vom Typ HK5, KK1, KK2 oder KK3 drei Einschränkungen geben. Alle Konflikte vom Typ HK3A, HK3B, HK4A, HK4B, HK5A und HK5B können gleichzeitig mehrere Abhängigkeiten zu Konflikten desselben oder unterschiedlichen Typs haben. Konflikte der Typen KK1, KK2, KK3A und KK3B können dagegen gleichzeitig mehrere Abhängigkeiten zu Konflikten verschiedener Typen aufweisen. Es können jedoch bei mehrfach vom selben Konflikttyp abhängigen Konflikten auch die gleichen Einschränkungen der Entscheidungsmöglichkeiten mehrfach auftreten. So sind für einen Konflikt vom Typ HK3A gleichzeitig zwei Abhängigkeiten bei Vorhandensein eines Konflikts vom Typ HK1A oder eines vom Typ HK2B möglich und die Entscheidungen werden jeweils um die erste Entscheidung E1 minimiert.

Die sich zu manchen abhängigen Konflikten ergebenden mehrfachen Einschränkungen mit den gleichen Entscheidungsmöglichkeiten bedürfen keiner gesonderten Betrachtung. Jede dieser Entscheidungseinschränkungen wird betrachtet, als ob es eine eigene, spezielle Einschränkung ist. Es werden somit alle mehrfachen Einschränkungen, wie andere auch, im Konflikt vermerkt. Bei einer Lösung eines Konflikts des Typs HK1 und HK2 in der Art, daß eine der mehrfach vorkommenden Einschränkungen aufgehoben wird, bleiben die restlichen dieser Einschränkungen erhalten. Erst wenn durch verschiedene Konfliktlösungen keine der mehrfachen Einschränkungen mehr vorhanden ist, kann eine Entscheidung dieser Art vorgenommen werden. Dies gilt unabhängig davon, ob die Einschränkung einmal oder mehrmals vorhanden war.

Die einmalig zu Beginn der Reintegration erkannten Einschränkungen durch Abhängigkeiten der Konflikte zu Konflikten des Typs HK1 und HK2 werden abhängig von der Lösung der Konflikte des Typs HK1 und HK2 während der Reintegration dynamisch geändert. So kommt es abhängig vom Typ der abhängigen Konflikte und der jeweiligen Lösungsentscheidung der createElement-Operation und deleteElement-Operation zu den nachfolgenden Änderungen der Entscheidungseinschränkungen:
a)Die Annahme einer createElement-Operation (erste Entscheidung E1 zu einem Konflikt vom Typ HK1) verursacht bei allen von der Operation abhängigen Konflikten eine Rücksetzung der Entscheidungseinschränkungen, d.h. eine Erweiterung der Entscheidungsmöglichkeiten.
b)Die Ablehnung einer deleteElement-Operation (zweite Entscheidung E2 zu einem Konflikt vom Typ HK2) verursacht ebenfalls eine Rücksetzung der Entscheidungseinschränkungen, d.h. eine Erweiterung der Entscheidungsmöglichkeiten für die von diesem Konflikt abhängigen Konflikte.
c)Die Ablehnung einer createElement-Operation (zweite Entscheidung E2 zu einem Konflikt vom Typ HK1) führt zur Beibehaltung der bereits vorgenommenen Entscheidungseinschränkungen der von diesem Konflikt abhängigen Konflikte. Es ändern sich somit keine Entscheidungsmöglichkeiten.
d)Die Annahme einer deleteElement-Operation (erste Entscheidung E1 zu einem Konflikt vom Typ HK2) führt zur Beibehaltung der bereits vorgenommenen Entscheidungseinschränkungen der von diesem Konflikt abhängigen Konflikte. Es ändern sich somit keine Entscheidungsmöglichkeiten.

Eine einseitig erzeugte Anomalie kann über jeweils zwei vorhandene Konflikte in einer Historie erkannt werden. Dabei gibt es die Möglichkeiten der Konfliktpaare HK5Aa/HK5Ab, HK4A/HK3A, HK4A/HK5A. Bei einem Konflikt vom Typ HK5Aa ist die deleteBeziehung-Operation und bei einem Konflikt vom Typ HK5Ab ist die createBeziehung-Operation an der Anomalie beteiligt.

Für Anomalien, die durch Veränderungen auf der Kopiedatenbank des zweiten Benutzers B entstehen, gelten die gleichen Möglichkeiten: HK5Ba/HK5Bb, HK4B/HK3B, HK4B/HK5B. Allen Konfliktpaaren ist dabei gemeinsam, daß es eine deleteBeziehung-Operation mit einem Identifier id1 als Quelldatenelement und einem Identifier id2 als Zieldatenelement in einem der beiden Konflikte gibt und die gleichen Identifier vertauscht als Quelldatenelement und Zieldatenelement in einer createBeziehung-Operation des anderen Konfliktes auftreten.

Die Annahme des Konflikts der einseitigen Anomalie, wie oben beschrieben, mit der createBeziehung-Operation verhindert die Ablehnung des Konflikts der einseitigen Anomalie mit der deleteBeziehung-Operation einer Ablehnung des Konflikts der einseitigen Anomalie mit der deleteBeziehung-Operation dagegen verhindert die Annahme des Konflikts der Anomalie mit der createBeziehung-Operation. Die Änderung einer der beiden Konflikte vermindert die Entscheidungsmöglichkeiten des anderen Konfliktes nicht.

Somit ergibt sich, daß eine einseitig erzeugte Anomalie gerichteter Beziehungen durch eine Ablehnung beider Konflikte, einer Annahme beider Konflikte, einer verschiedenen Änderung beider Konflikte oder einer Veränderung einer der Konflikte und einer Annahme oder Ablehnung des anderen Konflikts lösbar ist.

Eine beidseitig erzeugte Anomalie gerichteter Beziehungen ist durch die Entscheidung einer der beiden Konflikte und eine davon verschiedene Entscheidung des anderen Konfliktes lösbar.

Zur Vermeidung der Entstehung einer Anomalie (sogenannte Pseudo-Anomalie), wie oben beschrieben, sind folgende Einschränkungen der Entscheidungsmöglichkeiten vorgesehen:
a)Nach einer Annahme eines Konflikts mit der createBeziehung-Operation, die das gemeinsame Datenelement id1 als Zieldatenelement enthält (createBeziehung21) darf es für den Konflikt mit den zwei createBeziehung-Operationen, die das gemeinsame Datenelement als Quelldatenelement enthalten, keine Entscheidungsmöglichkeit der sechsten Entscheidungsmöglichkeit E6 mit einer Ersetzung des Zieldatenelements (idx oder idz) durch das Quelldatenelement id2(createBeziehung21) mehr geben.
b)Nach einer erfolgten sechsten Entscheidung E6 aufgrund der sechsten Entscheidungsmöglichkeit E6 und der Auswahl eines neuen Zieldatenelements id2 für den Konflikt mit den zwei createBeziehung-Operationen, die das gemeinsame Datenelement id1 als Quelldatenelement enthalten, darf keine Annahme des Konfliktes mit der createBeziehung-Operation mit dem gemeinsamen Datenelement id1 als Zieldatenelement (createBeziehung21) mehr möglich sein.

Wie oben beschrieben, werden im Rahmen dieses Verfahrens die Entscheidungsmöglichkeiten von Konflikten entsprechend deren Abhängigkeiten, Anomalien und Pseudo-Anomalien eingeschränkt.

Nach jeder Entscheidung zu einem Konflikt wird eine Änderung der Entscheidungsmöglichkeiten der von dem eben gelösten Konflikt abhängigen oder sich in einer gemeinsamen Anomalie bzw. Pseudo-Anomalie mit diesem Konflikt befindlichen Konflikte entsprechend den Abhängigkeiten, Anomalien und Pseudo-Anomalien vorgenommen.

Für jeden Konflikt wird, wie oben beschrieben, eine Entscheidung getroffen. Die Entscheidung kann auf unterschiedliche Weise erfolgen. Eine Übersicht über mögliche Entscheidungsvariationen ist in [1] zu finden.

Im Rahmen dieses Ausführungsbeispiels ist vorgesehen, daß eine Datenbank oder Kopiedatenbank als Referenzdatenbank angesehen wird, und der Abgleich gemäß der Referenzdatenbank erfolgt.

Es wird also, wie in **Fig.1** durch eine rekursive Schleife über einem Überprüfungsschritt (Schritt 105) dargestellt ist, überprüft, ob noch ein Konflikt vorliegt und somit eine Entscheidung getroffen werden muß. Ist eine Entscheidung noch zu treffen, so wird diese getroffen. Sind keine Konflikte mehr vorhanden, so wird ein letzter Verfahrensschritt (Schritt 106) durchgeführt, das Abspeichern der reintegrierten Datenbank, welche keine Inkonsistenzen mehr aufweist.

Die konsistenzfreie Datenbank wird wieder an alle weiteren Rechner, die mit dem ersten Rechner 200 verbunden sind, übertragen (Schritt 107).

Damit besitzen alle Rechner eine konsistente Kopiedatenbank.

Im weiteren werden einige Alternativen zu dem oben beschriebenen Ausführungsbeispiel dargestellt:

Die Erkennung von Inkonsistenzen kann auch nach einer vorgebbaren Anzahl erfolgter Behebung einer Inkonsistenz durch die Suche nach einer weiteren Inkonsistenz erfolgen. Dies kann dahingehend erweitert werden, daß erneut nach jeder Behebung einer Inkonsistenz die Suche nach einer nächsten Inkonsistenz und deren Behebung erfolgt.

Es ist ferner möglich, daß durch den ersten Rechner gemäß dem oben dargestellten Verfahren eine Folge von Korrekturbefehlen (Korrektursequenzen) ermittelt wird, die jeweils dem Rechner, dessen Kopiedatenbank auf Inkonsistenzen hin überprüft wurde, übermittelt wird und der jeweilige Rechner anhand der Korrektursequenz seine Kopiedatenbank an die Datenbank abgleicht.

Es ist ferner in einer alternativen Ausführungsform ebenfalls möglich, einem Benutzer oder mehreren Benutzern die Entscheidung zu überlassen, d.h. die Entscheidungsmöglichkeiten werden einem Benutzer auf dem Bildschirm dargestellt, und der Benutzer wählt über die Tastatur oder die Computermaus die von ihm gewünschte Entscheidung aus, die dann von dem Rechner durchgeführt wird.

In diesem Dokument ist folgende Veröffentlichung zitiert:
[1] DE 196 07 132 A1

## Patentansprüche

1. Verfahren zur rechnergestützten Behebung mindestens einer Inkonsistenz in einer Datenbankmenge, die eine Datenbank sowie mindestens eine Kopiedatenbank der Datenbank aufweist, welche Inkonsistenz durch Änderung der Datenbank und/oder der Kopiedatenbank entsteht,
a) bei dem mindestens ein Teil der Operationen, die eine Inkonsistenz erzeugen, definierten Konflikttypen zugeordnet ist,
b) bei dem jedem Konflikttyp ein Entscheidungsset zugeordnet ist, mit dem mögliche Entscheidungen angegeben werden, mit denen eine durch mindestens eine Operation des jeweiligen Konflikttyps erzeugte Inkonsistenz behoben werden kann,
c) bei dem die Inkonsistenz unter Verwendung des Entscheidungssets behoben wird.

2. Verfahren nach Anspruch 1,
bei dem mehrere Inkonsistenzen behoben werden.

3. Verfahren nach Anspruch 1 oder 2,
bei dem jedem Konflikttyp ein Entscheidungsset zugeordnet ist, mit dem mögliche Entscheidungen angegeben werden, mit denen eine durch mehrere Operationen des jeweiligen Konflikttyps erzeugte Inkonsistenz behoben werden kann,

4. Verfahren nach einem der Ansprüche 1 bis 3,
bei dem die Datenbankmenge mehrere Kopiedatenbanken der Datenbank aufweist.

5. Verfahren nach einem der Ansprüche 1 bis 4,
bei dem vor der Behebung der Inkonsistenzen alle Inkonsistenzen und deren Abhängigkeiten voneinander ermittelt werden.

6. Verfahren nach einem der Ansprüche 1 bis 5,
bei dem bei der Ermittlung einer Inlkonsistenz ein Konflikt, eine Anomalie oder eine Pseudo-Anaomalie ermittelt wird.

7. Verfahren nach einem der Ansprüche 1 bis 6,
bei dem während der Behebung der Inkonsistenzen das Entscheidungsset mindestens eines Konflikttyps in Abhängigkeit von den Abhängigkeiten der Inkonsistenzen verändert wird.

8. Verfahren nach einem der Ansprüche 1 bis 7,
bei dem nach einer vorgebbaren Anzahl von behobenen Inkonsistenzen die Datenbankmenge auf weitere.Inkonsistenzen und deren Abhängigkeiten, Anomalien und Pseudo-Anomalien hin untersucht wird.

9. Verfahren nach einem der Ansprüche 1 bis 8,
bei dem die Datenbankmenge eine objektorientierte Datenbank enthält.

10. Verfahren nach einem der Ansprüche 1 bis 9,
eingesetzt im Rahmen der objektorientierten Softwareentwicklung.

11. Verfahren nach einem der Ansprüche 1 bis 9,
eingesetzt im Rahmen der Erstellung eines strukturierten elektronischen Dokuments.

12. Anordnung zur Behebung mindestens einer Inkonsistenz in einer Datenbankmenge, die eine Datenbank sowie mindestens eine Kopiedatenbank der Datenbank aufweist, welche Inkonsistenz durch Änderung der Datenbank und/oder der Kopiedatenbank entsteht,
mit mindestens einem Prozessor, der derart eingerichtet ist, daß folgende Schritte durchführbar sind:
a) mindestens ein Teil der Operationen, die eine Inkonsistenz erzeugen, ist definierten Konflikttypen zugeordnet,
b) jedem Konflikttyp ist ein Entscheidungsset zugeordnet, mit dem mögliche Entscheidungen angegeben werden, mit denen eine durch mindestens eine Operation des jeweiligen Konflikttyps erzeugte Inkonsistenz behoben werden kann,
c) die Inkonsistenz wird unter Verwendung des Entscheidungssets behoben.

13. Anordnung nach Anspruch 12,
bei der der Prozessor derart eingerichtet ist, daß mehrere Inkonsistenzen behoben werden.

14. Anordnung nach Anspruch 12 oder 13,
bei der der Prozessor derart eingerichtet ist, daß jedem Konflikttyp ein Entscheidungsset zugeordnet ist, mit dem mögliche Entscheidungen angegeben werden, mit denen eine durch mehrere Operationen des jeweiligen Konflikttyps erzeugte Inkonsistenz behoben werden kann,

15. Anordnung nach einem der Ansprüche 12 bis 14,
bei der der Prozessor derart eingerichtet ist, daß die Datenbankmenge mehrere Kopiedatenbanken der Datenbank aufweist.

16. Anordnung nach einem der Ansprüche 12 oder 15,
bei der der Prozessor derart eingerichtet ist, daß vor der Behebung der Inkonsistenzen alle Inkonsistenzen und deren Abhängigkeiten voneinander ermittelbar sind.

17. Anordnung nach einem der Ansprüche 12 bis 16,
bei der der Prozessor derart eingerichtet ist, daß bei der Ermittlung einer Inkonsistenz ein Konflikt, eine Anomalie oder enie Pseudo-Anomalie ermittelbar ist.

18. Anordnung nach einem der Ansprüche 12 bis 17,
bei der der Prozessor derart eingerichtet ist, daß während der Behebung der Inkonsistenzen das Entscheidungsset mindestens eines Konflikttyps in Abhängigkeit von den Abhängigkeiten der Inkonsistenzen veränderbar ist.

19. Anordnung nach einem der Ansprüche 12 bis 18,
bei der der Prozessor derart eingerichtet ist, daß nach einer vorgebbaren Anzahl von behobenen Inkonsistenzen die Datenbankmenge auf weitere Inkonsistenzen und deren Abhängigkeiten, Anomalien und Pseudo-Anomalien hin untersucht wird.

20. Anordnung nach einem der Ansprüche 12 bis 19,
bei der der Prozessor derart eingerichtet ist, daß die Datenbankmenge eine objektorientierte Datenbank enthält.

21. Anordnung nach einem der Ansprüche 12 bis 20,
eingesetzt im Rahmen der objektorientierten Softwareentwicklung.

22. Anordnung nach einem der Ansprüche 12 bis 21,
eingesetzt im Rahmen der Erstellung eines strukturierten elektronischen Dokuments.

23. Satz mehrerer Anordnungen zur Behebung mindestens einer Inkonsistenz in einer Datenbankmenge, die eine Datenbank sowie mindestens eine Kopiedatenbank der Datenbank aufweist, welche Inkonsistenz durch Änderung der Datenbank und/oder der Kopiedatenbank entsteht,
bei dem jede Anordnung mindestens einen Prozessor aufweist, der derart eingerichtet ist, daß folgende Schritte durchführbar sind:
a) mindestens ein Teil der Operationen, die eine Inkonsistenz erzeugen, ist definierten Konflikttypen zugeordnet,
b) jedem Konflikttyp ist ein Entscheidungsset zugeordnet, mit dem mögliche Entscheidungen angegeben werden, mit denen eine durch mindestens eine Operation des jeweiligen Konflikttyps erzeugte Inkonsistenz behoben werden kann,
c) die Inkonsistenz wird unter Verwendung des Entscheidungssets behoben, und
bei dem die Anordnungen miteinander koppelbar sind.

## Revendications

1. Procédé pour l'élimination assistée par ordinateur d'au moins une inconsistance dans un ensemble de banques de données comportant une banque de données et au moins une banque de données de copie de ladite banque de données, laquelle inconsistance apparaît en modifiant la banque de données et/ou la banque de données de copie,
a) dans lequel au moins une partie des opérations générant une inconsistance est attribuée à des types de conflit définis,
b) dans lequel chaque type de conflit se voit attribuer un jeu de décisions indiquant des décisions possibles permettant d'éliminer une inconsistance générée par au moins une opération du type du conflit courant,
c) dans lequel on élimine l'inconsistance au moyen dudit jeu de décisions.

2. Procédé selon la revendication 1, dans lequel on élimine plusieurs inconsistances.

3. Procédé selon la revendication 1 ou 2, dans lequel chaque type de conflit se voit attribuer un jeu de décisions indiquant des décisions possibles permettant d'éliminer une inconsistance générée par plusieurs opérations du type du conflit courant.

4. Procédé selon l'une des revendications 1 à 3, dans lequel l'ensemble de banques de données comporte plusieurs banques de données de copie de la banque de données.

5. Procédé selon l'une des revendications 1 à 4, dans lequel, avant d'éliminer les inconsistances, on détermine toutes les inconsistances et leurs corrélations.

6. Procédé selon l'une des revendications 1 à 5, dans lequel, au moment de déterminer une inconsistance, on détermine un conflit, une anomalie ou une pseudo-anomalie.

7. Procédé selon l'une des revendications 1 à 6, dans lequel, durant l'élimination des inconsistances, on modifie le jeu de décisions au moins d'un type de conflit en fonction des corrélations des inconsistances.

8. Procédé selon l'une des revendications 1 à 7, dans lequel, après un nombre prédéfinissabte d'inconsistances éliminées, on examine l'ensemble de banques de données quant à d'autres inconsistances et leurs corrélations, anomalies et pseudo-anomalies.

9. Procédé selon l'une des revendications 1 à 8, dans lequel l'ensemble de banques de données comporte une banque de données orientée objet.

10. Procédé selon l'une des revendications 1 à 9; mis en oeuvre dans le cadre du développement de logiciels orientés objet.

11. Procédé selon l'une des revendications 1 à 9, mis en oeuvre dans le cadre de l'établissement d'un document électronique structuré.

12. Dispositif pour l'élimination d'au moins une inconsistance dans un ensemble de banques de données comportant une banque de données et au moins une banque de données de copie de ladite banque de données, laquelle inconsistance apparaît en modifiant la banque de données et/ou la banque de données de copie, comprenant au moins un processeur configuré de manière à pouvoir réaliser les étapes suivantes :
a) au moins une partie des opérations générant une inconsistance est attribuée à des types de conflit définis,
b) chaque type de conflit se voit attribuer un jeu de décisions indiquant des décisions possibles permettant d'éliminer une inconsistance générée par au moins une opération du type du conflit courant,
c) on élimine l'inconsistance au moyen du jeu de décisions.

13. Dispositif selon la revendication 12, dans lequel le processeur est configuré de telle manière que l'on élimine plusieurs inconsistances.

14. Dispositif selon la revendication 12 ou 13, dans lequel le processeur est configuré de telle manière que chaque type de conflit se voit attribuer un jeu de décisions indiquant des décisions possibles permettant d'éliminer une inconsistance générée par plusieurs opérations du type du conflit courant.

15. Dispositif selon l'une des revendications 12 à 14, dans lequel le processeur est configuré de telle manière que l'ensemble de banques de données comporte plusieurs banques de données de copie de la banque de données.

16. Dispositif selon l'une des revendications 12 ou 15, dans lequel le processeur est configuré de telle manière que, avant d'éliminer les inconsistances, on puisse déterminer toutes les inconsistances et leurs corrélations.

17. Dispositif selon l'une des revendications 12 à 16, dans lequel le processeur est configuré de telle manière que, au moment de déterminer une inconsistance, on puisse déterminer un conflit, une anomalie ou une pseudo-anomalie.

18. Dispositif selon l'une des revendications 12 à 17, dans lequel le processeur est configuré de telle manière que, durant l'élimination des inconsistances, on puisse modifier le jeu de décisions au moins d'un type de conflit en fonction des corrélations des inconsistances.

19. Dispositif selon l'une des revendications 12 à 18, dans lequel le processeur est configuré de telle manière que, après un nombre prédéfinissable d'inconsistances éliminées, on examine l'ensemble de banques de données quant à d'autres inconsistances et leurs corrélations, anomalies et pseudo-anomalies.

20. Dispositif selon l'une des revendications 12 à 19, dans lequel le processeur est configuré de telle manière que l'ensemble de banques de données comporte une banque de données orientée objet.

21. Dispositif selon l'une des revendications 12 à 20, mis en oeuvre dans le cadre du développement de logiciels orientés objet.

22. Dispositif selon l'une des revendications 12 à 21, mis en oeuvre dans le cadre de l'établissement d'un document électronique structuré.

23. Jeu de plusieurs dispositifs pour l'élimination d'au moins une inconsistance dans un ensemble de banques de données comportant une banque de données et au moins une banque de données de copie de ladite banque de données, laquelle inconsistance apparaît en modifiant la banque de données et/ou la banque de données de copie,
dans lequel chaque dispositif comprend au moins un processeur configuré de manière à pouvoir réaliser les étapes suivantes :
a) au moins une partie des opérations générant une inconsistance est attribuée à des types de conflit définis,
b) chaque type de conflit se voit attribuer un jeu de décisions indiquant des décisions possibles permettant d'éliminer une inconsistance générée par au moins une opération du type du conflit courant,
c) on élimine l'inconsistance au moyen du jeu de décisions, et
dans lequel les dispositifs peuvent être couplés entre eux.

## Claims

1. Method for computer-based removal of at least one inconsistency in a group of databases which comprises a database and at least one copy database of the database, said inconsistency arising due to a change to the database and/or the copy database,
a) wherein at least some of the operations which create an inconsistency are assigned to defined conflict types,
b) wherein each conflict type is assigned a decision set with which possible decisions are specified by means of which an inconsistency created by at least one operation of the respective conflict type can be removed,
c) wherein the inconsistency is removed using the decision set.

2. Method according to Claim 1,
wherein multiple inconsistencies are removed.

3. Method according to Claim 1 or 2,
wherein each conflict type is assigned a decision set with which possible decisions are specified by means of which an inconsistency created by a number of operations of the respective conflict type can be removed.

4. Method according to one of Claims 1 to 3,
wherein the group of databases has a plurality of copy databases of the database.

5. Method according to one of Claims 1 to 4,
wherein all inconsistencies and their mutual dependencies are determined before the inconsistencies are removed.

6. Method according to one of Claims 1 to 5,
wherein a conflict, an anomaly or a pseudo-anomaly is detected during the detection of an inconsistency.

7. Method according to one of Claims 1 to 6,
wherein the decision set of at least one conflict type is changed during the removal of the inconsistencies in accordance with the dependencies of the inconsistencies.

8. Method according to one of Claims 1 to 7,
wherein, after a predefinable number of removed inconsistencies, the group of databases is investigated for further inconsistencies and their dependencies, anomalies and pseudo-anomalies.

9. Method according to one of Claims 1 to 8,
wherein the group of databases contains an object-oriented database.

10. Method according to one of Claims 1 to 9,
used in the course of object-oriented software development.

11. Method according to one of Claims 1 to 9,
used in the course of the creation of a structured electronic document.

12. Arrangement for removing at least one inconsistency in a group of databases which has a database and at least one copy database of the database, which inconsistency arises due to a change to the database and/or the copy database,
having at least one processor which is set up in such a way that the following steps can be performed:
a) at least some of the operations which create an inconsistency are assigned to defined conflict types,
b) each conflict type is assigned a decision set with which possible decisions are specified by means of which an inconsistency created by at least one operation of the respective conflict type can be removed,
c) the inconsistency is removed using the decision set.

13. Arrangement according to Claim 12,
wherein the processor is set up in such a way that a number of inconsistencies are removed.

14. Arrangement according to Claim 12 or 13,
wherein the processor is set up in such a way that each conflict type is assigned a decision set with which possible decisions are specified by means of which an inconsistency created by a number of operations of the respective conflict type can be removed.

15. Arrangement according to one of Claims 12 to 14,
wherein the processor is set up in such a way that the group of databases comprises a plurality of copy databases of the database.

16. Arrangement according to one of Claims 12 or 15,
wherein the processor is set up in such a way that all inconsistencies and their mutual dependencies can be detected before the inconsistencies are removed.

17. Arrangement according to one of Claims 12 to 16,
wherein the processor is set up in such a way that a conflict, an anomaly or a pseudo-anomaly can be detected during the detection of an inconsistency.

18. Arrangement according to one of Claims 12 to 17,
wherein the processor is set up in such a way that during the removal of the inconsistencies the decision set of at least one conflict type can be changed in accordance with the dependencies of the inconsistencies.

19. Arrangement according to one of Claims 12 to 18,
wherein the processor is set up in such a way that after a predefinable number of removed inconsistencies the group of databases is investigated for further inconsistencies and their dependencies, anomalies and pseudo-anomalies.

20. Arrangement according to one of Claims 12 to 19,
wherein the processor is set up in such a way that the group of databases contains an object-oriented database.

21. Arrangement according to one of Claims 12 to 20, used in the course of object-oriented software development.

22. Arrangement according to one of Claims 12 to 21,
used in the course of the creation of a structured electronic document.

23. Set of a plurality of arrangements for removing at least one inconsistency in a group of databases which has a database and at least one copy database of the database, which inconsistency arises due to a change to the database and/or the copy database,
wherein each arrangement has at least one processor which is set up in such a way that the following steps can be performed:
a) at least some of the operations which create an inconsistency are assigned to defined conflict types,
b) each conflict type is assigned a decision set with which possible decisions are specified by means of which an inconsistency created by at least one operation of the respective conflict type can be removed,
c) the inconsistency is removed using the decision set, and
wherein the arrangements can be linked to one another.
